# EUROPEAN PATENT SPECIFICATION

(11) **EP 3 578 427 B1**
(45) Date of publication and mention of the grant of the patent: **22.02.2023**
(21) Application number: 19177732.5
(22) Date of filing: 31.05.2019
(51) Int. Cl.: B60T 7/04, B60W 10/18, B60W 10/20, B60W 10/196, B60W 30/06, B62D 15/02

(54) **PARKING SUPPORT DEVICE**
PARKHILFEVORRICHTUNG
DISPOSITIF DE SUPPORT DE PARKING

(30) Priority: 08.06.2018 JP 2018110588
(43) Date of publication of application: 11.12.2019
(73) Proprietor: TOYOTA JIDOSHA KABUSHIKI KAISHA, Toyota-shi, Aichi, 471-8571 (JP)
(72) Inventor: NAKAGAWA, Takuya, Toyota-shi, Aichi 471-8571 (JP); MINASE, Yuki, Toyota-shi, Aichi 471-8571 (JP); SANNODO, Shinya, Toyota-shi, Aichi 471-8571 (JP); OTANI, Shinya, Toyota-shi, Aichi 471-8571 (JP); IMAI, Norio, Kariya-shi, Aichi 448-8650 (JP)
(74) Representative: J A Kemp LLP

(56) References cited:
- WO-A1-2014/203334
- US-A1- 2010 259 420
- US-A1- 2016 075 326
- US-A1- 2018 043 905

## Description

### BACKGROUND

### Technical Field

The present invention relates to a parking support device configured to control traveling state of a vehicle for parking the vehicle into a parking area where the vehicle can be parked.

### Related Art

Hitherto, there has been known a parking support device configured to support a parking operation of a driver by executing an automatic parking control (a parking support control) for automatically controlling a steering angle in order to automatically park the vehicle into a parking area.

Japanese Patent Application Laid-open No. 2009-269462 describes the following parking support device (hereinafter, referred to as a "conventional device"). When the vehicle stops, the driver moves a shift lever to a reverse position, and the driver changes a parking switch from an off state to an on state. At this time point, the conventional device displays a target parking frame representing a target parking area on a screen of a display device (a display unit) before executing the automatic parking control. The driver can confirm the target parking frame with the driver's eyes, and adjust a location of the target parking frame. When the driver consents to park the vehicle into the target parking area, the driver operates (touches) a decision button displayed on the screen on which the target parking frame is displayed. When and after the driver operates (touches) the decision button, the conventional device starts the automatic parking control for automatically parking the vehicle into the target parking area.

US 2018/0043905 A1 discloses a parking assistance apparatus including an interface unit configured to receive at least one of brake operation input information, accelerator operation input information, and steering operation input information; a display unit configured to display a graphic image for an automatic parking function; and a processor configured to set a target parking space based on information about the vehicle surroundings; design a parking path for directing a vehicle to the set target parking space; and perform the automatic parking function by performing control such that the vehicle follows the parking path, wherein, when it is detected that there is an operation input of the user through the interface unit, the processor performs the automatic parking function by reflecting the operation input of the user or releases the automatic parking function.

US 2016/0075326 A1 discloses a parking assist system includes an electronic control unit configured to detect a stopped vehicle, and to set a target position, to which a vehicle moves, to a position between a first stopped vehicle and a second stopped vehicle that are detected, the position being commensurate with a distance between the first stopped vehicle and the second stopped vehicle.

WO 2014/203334 A1 discloses a control device for a vehicle is provided with: a route information acquisition unit for acquiring, as information pertaining to a route of the vehicle, information pertaining to a direction of travel of the vehicle and information pertaining to the steering direction of the front wheels of the vehicle; and a sorting unit for sorting a plurality of clearance sonar sensors, that output signals corresponding to the distance from the vehicle to an obstacle, into sensors-to-be-validated and sensors-to-be-invalidated, where such sorting is performed on the basis of the information acquired by the route information acquisition unit.

### Summary

The driver has been stepping on the brake pedal to stop the vehicle (to cause the vehicle not to move) since a time point before the automatic parking control starts. However, the driver may decrease stepping force to the brake pedal unintentionally while the driver is looking at the target parking frame. In this case, the driver may feel anxiety because the vehicle starts moving.

The present invention has been made to solve the problem described above. The present disclosure has an object to provide a parking support device which can decrease a possibility that the vehicle starts moving immediately before the automatic parking control is started so as to be able to decrease a possibility that the driver feels the anxiety.

According to the present invention there is provided a parking support device as specified in the claims.

The vehicle continues stopping (does not move) because of the stop brake control for a time period from a time point when the parking start condition becomes satisfied to a time point when the parking consent operation is performed. Therefore, even if the driver weakens (decreases) step force applied to a brake pedal unintentionally while the driver is looking at the parking area image, the vehicle can continue stopping (does not start moving) because the stop brake control is being executed. Accordingly, the parking support device can decrease a possibility that the vehicle starts moving before starting executing the automatic parking control. Consequently, the parking support device can decrease a possibility that the driver feels the anxiety.

The control device is configured to:
display, on the display device, with the parking area image, a consent operation reception image (320) which the driver selects when the driver consents to park the vehicle into the parking area, when the control device determines that the parking request operation has been performed; and
determine that the parking consent operation is performed (Step 840) when the consent operation reception image has been selected after the parking start condition was determined to be satisfied ("Yes" at Step 830).

The driver can perform the parking consent operation by touching the consent operation reception image displayed together with the parking area image. The driver looks at the parking area image in order to confirm the relative location/positional relationship between the vehicle and the parking area before the driver performs the parking consent operation. The consent operation reception image is displayed together with the parking area image. Therefore, the consent operation reception image is in the driver's sight. Accordingly, the driver can perform the operation on/to the consent operation reception image with looking at the parking area image (without changing the driver's eyes direction from the parking area image). Hereby, operability of the parking consent operation by the driver can be improved.

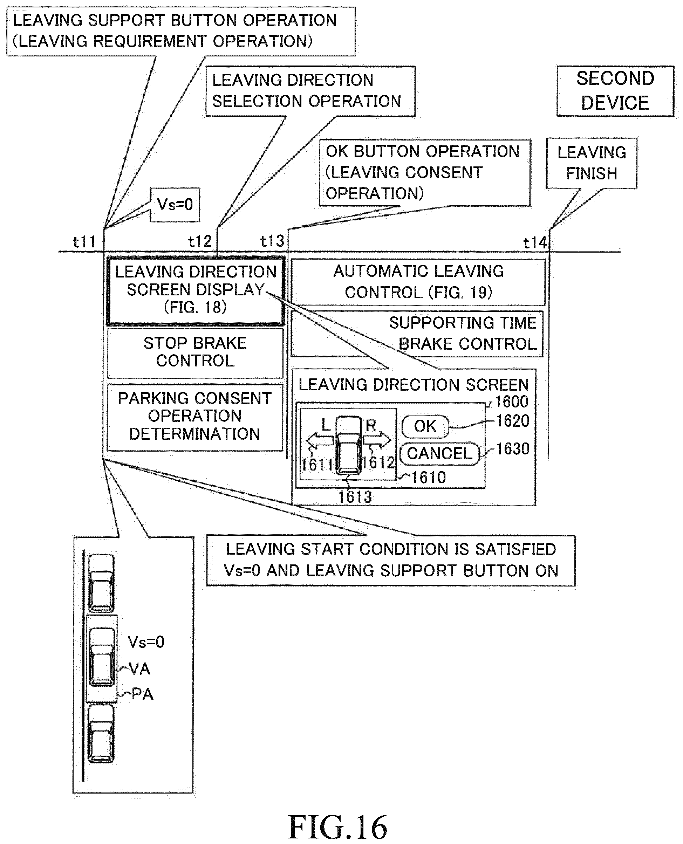

In one embodiment of the present invention, the control device is configured to:
display, on the display device, a leaving direction image (1600) showing a leaving direction in which the vehicle leaves the parking area (Step 1820), when the control device determines that a leaving request operation to request an automatic leaving control for controlling the traveling state of the vehicle such that the vehicle leaves the parking area has been performed ("Yes" at Step 1805);
start the stop brake control when the control device determines that a leaving start condition has been satisfied (a time point t11 in FIG. 16), the leaving start condition being satisfied when both the second condition and a third condition are satisfied, the third condition being a condition which is satisfied when the leaving request operation has been performed; and
finish the stop brake control and start the automatic leaving control such that the vehicle leaves the parking area in the leaving direction (Step 1940), when the control device determines that a leaving consent operation representing that the driver consents that the vehicle leaves the parking area in the leaving direction has been performed after the leaving start condition had been satisfied (a time point t13).

The vehicle continues stopping (does not move) in a time period from a time point when the leaving start condition is satisfied to a time point when the leaving consent operation is performed, since the stop brake control which is executed in that time period. Thus, even if the driver weakens (decreases) the step force applied to a brake pedal unintentionally while the driver is looking at the leaving direction image before the driver performs the leaving consent operation, the vehicle can continue stopping because the stop brake control is being executed. Therefore, the parking support device can decrease a possibility that the vehicle starts moving before the automatic leaving control is started so as to be able to decrease a possibility that the driver feels the anxiety.

In the above description, in order to facilitate the understanding of the invention, reference symbols used in embodiment of the present invention are enclosed in parentheses and are assigned to each of the constituent features of the invention corresponding to the embodiment.

### BRIEF DESCRIPTION OF THE DRAWINGS

FIG. 1 is a schematic system configuration diagram of a parking support device (a first device) according to a first embodiment.
FIG. 2 is a diagram for illustrating an arrangement position of camera sensors, front clearance sonars, and rear clearance sonars illustrated in FIG. 1 and a detection range of each of the clearance sonars.
FIG. 3 is a timing chart for illustrating an execution timing of each control executed by the first device.
FIG. 4 is a flowchart illustrating a routine executed by a CPU of a parking support ECU illustrated in FIG. 1.
FIG. 5 is a flowchart illustrating a routine executed by the CPU of the parking support ECU illustrated in FIG. 1.
FIG. 6 is a flowchart illustrating a routine executed by the CPU of the parking support ECU illustrated in FIG. 1.
FIG. 7 is a flowchart illustrating a routine executed by the CPU of the parking support ECU illustrated in FIG. 1.
FIG. 8 is a flowchart illustrating a routine executed by the CPU of the parking support ECU illustrated in FIG. 1.
FIG. 9 is a flowchart illustrating a routine executed by the CPU of the parking support ECU illustrated in FIG. 1.
FIG. 10 is a flowchart illustrating a routine executed by the CPU of the parking support ECU illustrated in FIG. 1.
FIG. 11 is a timing chart for illustrating an execution timing of each control executed by the first device (a first modification device) according to a first modification example.
FIG. 12 is a flowchart illustrating a routine executed by the CPU of the parking support ECU of the first modification device.
FIG. 13 is a flowchart illustrating a routine executed by the CPU of the parking support ECU of the first modification device.
FIG. 14 is a flowchart illustrating a routine executed by the CPU of the parking support ECU of the first device (a second modification device) according to a second modification example.
FIG. 15 is a flowchart illustrating a routine executed by the CPU of the parking support ECU of the first device (a third modification device) according to a third modification example.
FIG. 16 is a timing chart for illustrating an execution timing of each control executed by the parking support device (a second device) according to a second embodiment.
FIG. 17 is a flowchart illustrating a routine executed by the CPU of the parking support ECU of the second device.
FIG. 18 is a flowchart illustrating a routine executed by the CPU of the parking support ECU of the second device.
FIG. 19 is a flowchart illustrating a routine executed by the CPU of the parking support ECU of the second device.

### DETAIL DESCRIPTION

A parking support device according to each embodiment of the present invention will next be described with reference to the accompanying drawings. <First Embodiment>

### (Configuration)

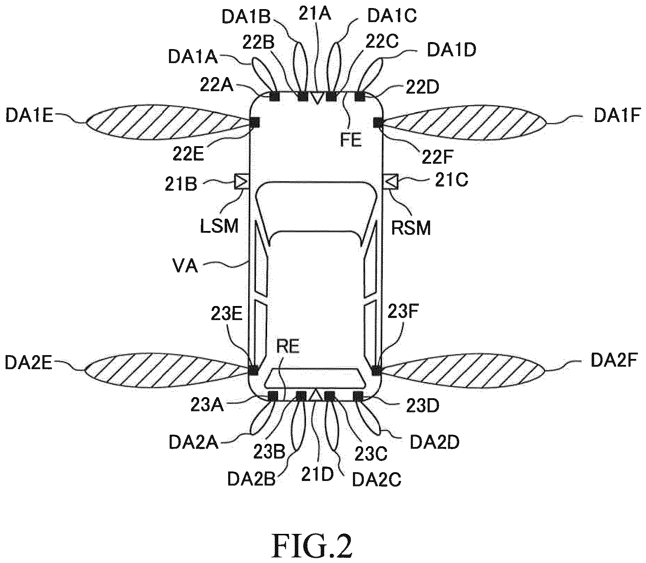

A parking support device (hereinafter, referred to as a "first device") 10 according to a first embodiment is applied to a vehicle VA (referring to FIG.2).

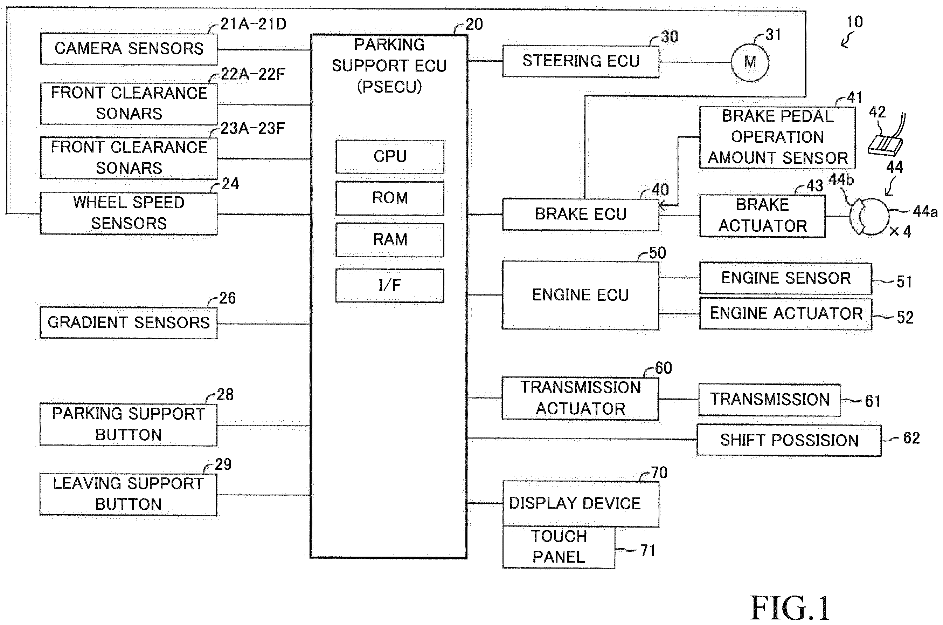

As illustrated in FIG. 1, the first device 10 comprises a parking support ECU (hereinafter, referred to as a "PSECU") 20, a steering ECU 30, a brake ECU 40 and an engine ECU 50. The ECUs are connected to each other via an unillustrated communication · sensor system CAN (Controller Area Network) to be able to mutually transmit and receive information to/from those ECUs.

In the present specification, the ECU is an abbreviation of an "Electronic Control Unit". The ECU is an electronic control circuit which includes, as a main component, a microcomputer having a CPU, a ROM, a RAM, an interface I/F, or the like. The CPU achieves various functions through executing instructions (routines) stored in the ROM. Some or all of those ECUs may be integrated into a single ECU.

The first device 10 comprises four camera sensors 21A through 21D, six front clearance sonars 22A through 22F, six rear clearance sonars 23A through 23F, a plurality of wheel speed sensors 24, a gradient (tilt) sensor 26, a parking support button 28 (hereinafter, may be referred to as a "parking request operation reception part"), and a leaving support button 29 (hereinafter, may be referred to as a "leaving request operation reception part"). They are connected to the PSECU 20.

When the camera sensors 21A through 21D do not need to be distinguished from each other, they are referred to as "camera sensors 21". When the front clearance sonars 22A through 22F do not need to be distinguished from each other, they are referred to as "front clearance sonars 22". When the rear clearance sonars 23A through 23F do not need to be distinguished from each other, they are referred to as "rear clearance sonars 23". Furthermore, when the front clearance sonars 22 and the rear clearance sonars 23 do not need to be distinguished from each other, they are referred to as "clearance sonars".

As illustrated in FIG. 2, the camera sensor 21A is arranged in the vicinity of a center of a front end FE of the vehicle VA in a vehicle width direction, and photographs a front area of the vehicle VA every time a predetermined time elapses. The camera sensor 21B is arranged in a left side mirror LSM disposed at a left side of the vehicle VA, and photographs a left area of the vehicle VA every time a predetermined time elapses. The camera sensor 21C is arranged in a right side mirror RSM disposed at a right side of the vehicle VA, and photographs a right area of the vehicle VA every time a predetermined time elapses. The camera sensor 21D is arranged in the vicinity of a center of a rear end RE of the vehicle VA in the vehicle width direction, and photographs a rear area of the vehicle VA every time a predetermined time elapses. In the present specification, photographing has the same meaning of generating image data of a photographed area corresponding to each of the camera sensors.

Each of the clearance sonars emit/transmit ultrasonic waves to a detection area. A three-dimensional object (obstacle) in the detection area reflects the emitted ultrasonic waves. The clearance sonar detects the obstacle by receiving the reflected ultrasonic waves (reflected waves). Each of the clearance sonars transmits, to the PSECU 20, obstacle information including time (transmitting and receiving time) between a time point when the ultrasonic waves are transmitted (emitted) and a time point when the reflected waves are received. The PSECU 20 specifies a distance between the vehicle VA and the obstacle based on the transmitting and receiving time. Furthermore, the PSECU 20 specifies a location of the obstacle relative to the vehicle VA, based on a direction indicative of the detection area corresponding to the clearance sonar which transmits the obstacle information, and the specified distance.

Each of the front clearance sonars 22A through 22D is arranged at the front end FE of the vehicle VA with a constant interval in the vehicle width direction. The front clearance sonars 22A through 22D detect the obstacle in detection areas DA1A through DA1D, respectively. Each of the detection areas DA1A through DA1D is an elliptical area which spreads in a front direction of the vehicle VA. The front clearance sonar 22E is arranged in a front left side of the vehicle VA. The front clearance sonar 22E detects the obstacle in a detection area DA1E which is an elliptical area spreading in a left direction from the front clearance sonar 22E. The front clearance sonar 22F is arranged in a front right side of the vehicle VA. The front clearance sonar 22F detects the obstacle in a detection area DA1F which is an elliptical area spreading in a right direction from the front clearance sonar 22F.

Each of the rear clearance sonars 23A through 23D is arranged at the rear end RE of the vehicle VA with a constant interval in the vehicle width direction. The rear clearance sonars 23A through 23D detect the obstacle in detection areas DA2A through DA2D respectively. Each of the detection areas DA2A through DA2D is an elliptical area spreading in a rear direction of the vehicle VA. The rear clearance sonar 23E is arranged in a rear left side of the vehicle VA. The rear clearance sonar 23E detects the obstacle in a detection area DA2E which is an elliptical area spreading in the left direction from the rear clearance sonar 23E. The rear clearance sonar 23F is arranged in a rear right side of the vehicle VA. The rear clearance sonar 23F detects the obstacle in a detection area DA2F which is an elliptical area spreading in the right direction from the rear clearance sonar 23F.

A maximum range of the ultrasonic waves emitted by each of the front clearance sonars 22E and 22F and the rear clearance sonars 23E and 23F is longer than that of the ultrasonic waves emitted by the other clearance sonars. Hereby, a detectable distance in each of the left direction from the left side of the vehicle VA and the right direction from the right side of the vehicle VA is longer than that in each of the front direction and the rear direction.

Other sensors will continue being described with reference back to FIG. 1.

Each of the wheel speed sensors 24 outputs pulse signals depending on a rotation speed of the corresponding one of wheels (not shown). The PSECU 20 detects vehicle speed Vs based on the pulse signal.

The gradient sensor 26 outputs a signal corresponding to a gradient angle (hereinafter, referred to as a "front-rear gradient angle") of the vehicle VA relative to a horizontal plane in a front-rear direction of the vehicle VA.

The parking support button 28 and the leaving support button 29 are arranged in the vicinity of a steering wheel (not shown). When the driver wants the PSECU 20 to execute the automatic parking control, the driver operates/touches the parking support button 28. The parking support button 28 outputs a high-level signal (an operation signal) when the driver is operating/touching the parking support button 28, and outputs a low-level signal (a non-operation signal) when the driver performs no operation on/to (does not touch) the parking support button 28. When the driver wants the PSECU 20 to execute an automatic leaving control described later, the driver operates/touches the leaving support button 29. The leaving support button 29 outputs a high-level signal (an operation signal) when the driver is operating/touching the leaving support button 29, and outputs a low-level signal (a non-operation signal) when the driver performs no operation on/to (does not touch) the leaving support button 29.

The steering ECU 30 is a controller of a well-known electric power steering system. The steering ECU 30 is connected to a steering motor 31. The steering motor 31 is embedded in a steering mechanism (not shown) having the steering wheel, a steering shaft connected to the steering wheel, a steering gear mechanism, and the like. The steering motor 31 generates torque through using electric power, which is supplied from a vehicle battery (not shown). The direction, magnitude, and the like, of the torque are adjusted by the steering ECU 30. The torque is used to generate a steering assist torque and/or to steer a left steered wheel and a right steered wheel (to change a steered angle).

The steering ECU 30 normally detects steering torque applied by the driver using a steering torque sensor (not shown) to make the steering motor 31 generate the steering assist torque corresponding to the steering torque in order to lighten a steering operation by the driver. Furthermore, the steering ECU 30 detects a steered angle of the steering wheel using a steered angle sensor (not shown). When the steering ECU 30 receives a steering instruction including a target steered angle transmitted by the PSECU 20, the steering ECU 30 controls a drive state of the steering motor 31 in such manner that the detected steered angle coincides with the target steered angle included in the steering instruction so as to steer the steered wheel.

The brake ECU 30 is connected to a brake pedal operation amount sensor 41, the wheel speed sensors 24, and the like. The brake ECU 40 receives a detection signal from each of those sensors.

The brake pedal operation amount sensor 41 detects an operation amount (a brake pedal operation amount) BP of a brake pedal 42 of the vehicle VA. The brake pedal operation amount BP becomes "0" when the driver performs no operation on the brake pedal 42.

The brake ECU 40 is connected to a brake actuator 43. The brake actuator 43 is a hydraulic control actuator. The brake actuator 43 is provided in a hydraulic circuit between an "unillustrated master cylinder which pressurizes working oil by using a depressing force applied to the brake pedal 42" and "friction brake mechanisms 44". Each of the friction brake mechanisms 44 is provided in the corresponding one of the wheels. Each of the friction brake mechanisms 44 includes a "brake disc 44a which is fixed to the corresponding one of the wheels" and a "brake caliper 44b which is fixed to the vehicle body". The oil pressure of the working oil supplied by the brake actuator 43 works a wheel cylinder installed in the brake caliper 44b. The brake pad is pressed to the brake disc 44a by working the wheel cylinder. As a result, frictional brake force BF is generated.

The brake ECU 40 drives the brake actuator 43 based on final brake force TBF to adjust the oil pressure of the working oil supplied to the wheel cylinder. As a result, adjusted brake force (frictional brake force) BF is applied to each of the wheels. The brake ECU 40 calculates operation brake force BFsousa based on the brake pedal operation amount BP. The brake ECU 40 selects, as the final target brake force TBF, the operation brake force BFsousa and required brake force (for example, stop operation amount BPteishi described later) transmitted from the PSECU 20, whichever is greater. It should be noted that the brake ECU 40 determines the operation brake force BFsousa in such a manner that the operation brake force BFsousa becomes greater as the brake pedal operation amount BP becomes greater, normally.

The engine ECU 50 is connected to a plurality of engine sensors 51, and receives a detection signal from each of the engine sensors 51.

The engine sensors 51 detect various drive state amounts of "a gasoline-fuel injection, spark-ignition-type, and multi-cylinder engine (not shown) which is a driving source of the vehicle VA". The engine sensors 51 include a throttle valve opening degree sensor, a engine rotation speed sensor, an air intake sensor, and the like. Furthermore, the engine sensors 51 include an acceleration pedal operation amount sensor for detecting an operation amount AP of an acceleration pedal (not shown).

The engine ECU 50 is connected to engine actuators 52 which includes a throttle valve actuator a fuel injection actuator, and the like. The engine ECU 50 changes torque generated by the internal combustion engine through driving the engine actuator 52 so as to adjust driving force of the vehicle VA. The engine ECU 50 drives the throttle valve actuator in such a manner that an opening degree of a throttle valve coincides with a determined target throttle valve opening degree. It should be noted that the engine ECU 50 determines the throttle valve opening degree becomes greater as the acceleration pedal operation amount becomes greater, normally.

The first device 10 further comprises a transmission actuator 60, a transmission 61, and a shift position sensor 62.

The transmission actuator 60 is connected to the PSECU 20 and the transmission 61. The transmission actuator 60 changes a gear position of the transmission 61 of the vehicle VA. The shift position sensor 62 is connected to the PSECU 20, and outputs, to the PSECU 20, a signal indicative of a shift position SP representing a position of a shift lever (not shown) performed an operation on by the driver.

The PSECU 20 determines the gear position based on the shift position SP, the acceleration pedal operation amount AP, and the vehicle speed Vs. Thereafter, the PSECU 20 transmits a driving signal to the transmission actuator 60, so that the determined gear position is achieved. For example, when the shift position is located at a position of a reverse range "R", the PSECU 20 and the transmission actuator 60 set the gear position of the transmission 61 to a position for making the vehicle VA reverse. When the shift position SP is located at a position of a drive position "D", the PSECU 20 and the transmission actuator 60 set the gear position of the transmission 61 to a position for making the vehicle VA move forward.

The first device 10 further comprises a display (display device) 70. The display 70 includes a touch panel (a touch-panel display) 71. The display 70 receives display information from the ECUs and a navigation device (not shown) of the vehicle VA to display the received information on the touch panel 71. When an occupant or the driver touches a screen of the touch panel 71, the display 70 receives an operation input corresponding a position which he/she touches.

### (Outline of Operation)

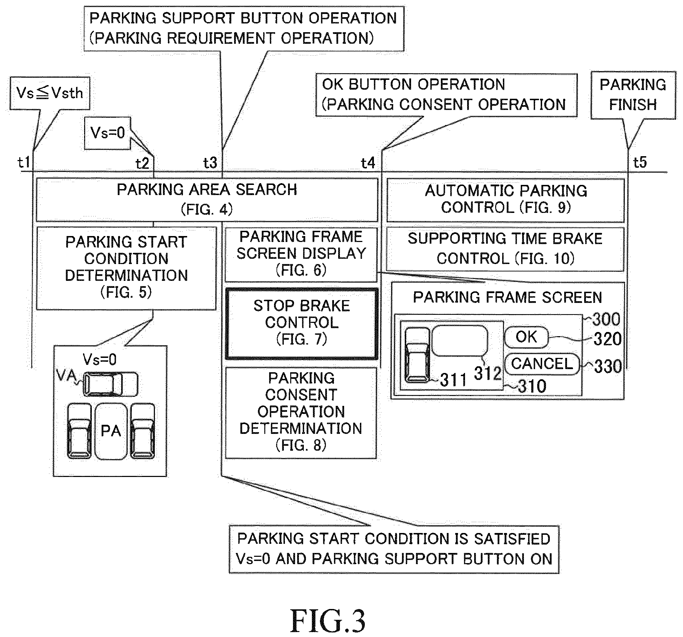

The first device 10 operates as follows.
(1) When the vehicle speed Vs becomes equal to or lower than a threshold speed Vsth, the first device 10 starts searching for a parking area PA where the vehicle VA can park.
(2) When "a parking start condition is satisfied, the parking start condition including both a condition that the vehicle VA stops and a condition that the driver performs an ON operation on/to the parking support button 28", the first device 10 displays a parking frame screen 300 indicative of "a location of the parking area PA (312) relative to the vehicle VA (311)" on the touch panel 71, as shown in FIG.3. The parking frame screen 300 includes an OK button 320 (a consent operation reception image). Further, in this case, the first device 10 executes a stop brake control for applying, to the vehicle VA, the brake force equal to or greater than a stop brake force BFteishi which can make the vehicle VA continue stopping (or which can cause the vehicle VA not to move). In other words, the first device 10 sets the target brake force TBF to the stop brake force BFteishi.
(3) When the first device 10 detects the operation on/to the OK button 320, the first device 10 determines that the driver has performed a parking consent operation representing that the driver consents to park the vehicle VA into the parking area PA. In this case, the first device 10 stops the stop brake control and starts an automatic parking control for controlling a travel state of the vehicle VA such that the vehicle VA is parked automatically into "the parking area PA into which the driver consents to park the vehicle VA". It should be noted that the first device 10 executes a supporting time brake control described later while the first device 10 is executing the automatic park control.

In detail, the first device 10 executes the above described stop brake control during a time period from a time point when the parking start condition is satisfied to a time point when the driver performs the operation on/to the OK button 320 (the park consent operation). Even when the driver weakens (decreases) the step force applied to the brake pedal 42 during the above time period, the stop brake force BFteishi continues being applied to the vehicle VA such that the vehicle VA continues stopping. This can decrease a possibility that the vehicle starts traveling/moving during the above time period. Further, this allows the automatic parking control to be started with the driver's consent. That is, the first device 10 can prohibit the vehicle VA from starting moving/traveling without the driver's consent, and can start letting the vehicle VA move/travel according to the automatic parking control with the driver's consent.

The operation of the first device 10 will be described specifically with reference to FIG. 3.

When the vehicle speed Vs of the vehicle VA becomes equal to or lower than the threshold speed Vsth (e.g. 30km/h) at a time point t1, the first device 10 starts searching for the parking area PA, and determining whether or not a parking start condition is satisfied. The parking start condition is satisfied when both of the following conditions C1 and C2 are satisfied.

Condition C1: The vehicle speed Vs is "0 km/h". In other words, the vehicle VA has stopped (does not move).

Condition C2: The driver operates/touches the parking support button 28.

At the time point t1, the parking start condition is not satisfied, because neither the condition C1 nor the condition C2 is satisfied.

It is assumed that, at a time point t2, the vehicle speed Vs has become "0 km/h", so that the vehicle VA has stopped at a location/position. When the vehicle has stopped at the location/position, one of the searched parking places PA is (located) on the right side of the vehicle VA. It should be noted that a parking method in such a manner that "the front-rear direction of the vehicle VA observed when the vehicle VA stops before the vehicle VA starts the parking" crosses (intersects with) "the front-rear direction of the vehicle VA observed when the vehicle SV stops at a time point when the vehicle VA finishes the parking" is referred to as a "perpendicular parking".

At the time point t2, the parking start condition is not satisfied, because the condition C2 is not satisfied although the condition C1 is satisfied.

It is assumed that the driver performs the operation on/to the parking support button 28 at a time point t3. In this case, the first device 10 determines that the parking start condition is satisfied, because both of the conditions C1 and C2 are satisfied.

The first device 10 starts displaying the parking frame screen 300 at the time point t3. The parking frame screen 300 includes a location relationship display area 310, the OK button 320, and a cancel button 330. In the location relationship display area 310, both a vehicle icon 311 representing the vehicle VA and a parking frame 312 representing the parking area PA are displayed. The first device 10 determines whether or not the driver performs the operation on/to the OK button 320 at and after the time point t3.

At the time point t3, the first device 10 starts the stop brake control, because the parking start condition is satisfied.

The parking frame screen 300 is displayed at the time point t3. The driver can grasp a location/positional relationship between the vehicle VA (the vehicle image 311) and the parking area PA (the parking frame 312). When the driver consents to park the vehicle VA into the parking area PA, the driver touches the OK button 320. When the driver has touched the OK button 320, the first device 10 determines that the driver has performed the operation on/to the OK button 320. When the driver wants to cancel the automatic parking control, the driver touches the cancel button 330. When the driver has touched the cancel button 330, the first device 10 determines that the driver has performed the operation on/to the cancel button 330.

Making the determination that the driver has touched the OK button 320 has the same meaning of detection of the parking consent operation representing that the driver consents to park the vehicle VA into the parking area PA. The first device 10 stops the stop brake control using the stop brake force BFteishi at a time point t4 (at a time when the parking consent operation is detected). Consequently, the vehicle VA is allowed to start moving. Furthermore, at the time point t4, the first device 10 starts the automatic parking control control for controlling the travel state of the vehicle VA to park the vehicle VA automatically into the parking area PA. In more detail, the first device 10 transmits the steering instruction to the steering ECU 30, and transmits the driving instruction to the engine ECU 50. It should be noted that the first device 10 may transmit the brake instruction to the brake ECU 40 while executing the automatic parking control control. As a result, the vehicle VA starts moving/traveling to the parking area PA.

Furthermore, the first device 10 starts the supporting time brake control at the time point t4. In more detail, the first device 10 applies the brake force equal to or greater than supporting time brake force BFshien to the vehicle VA. It should be noted that the supporting time brake force BFshien is an appropriate value, which is smaller than the stop brake force BFteishi, for enabling the vehicle VA to move/travel smoothly through the automatic parking control.

When the vehicle reaches the parking area PA at a time point t5, the first device 10 finishes the automatic parking control and the supporting time brake control.

### (Specific Operation)

### 1. Search for Parking Area PA

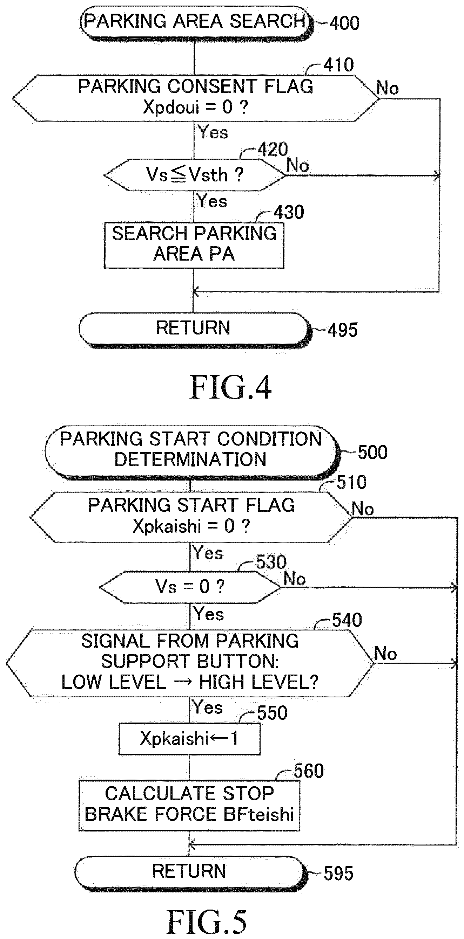

The CPU of the PSECU 20 (hereinafter, "CPU" means the CPU of the PSECU 20 unless otherwise specified) is configured to execute a routine (a parking area search routine) represented by a flowchart shown in FIG. 4, every time a predetermined time elapses.

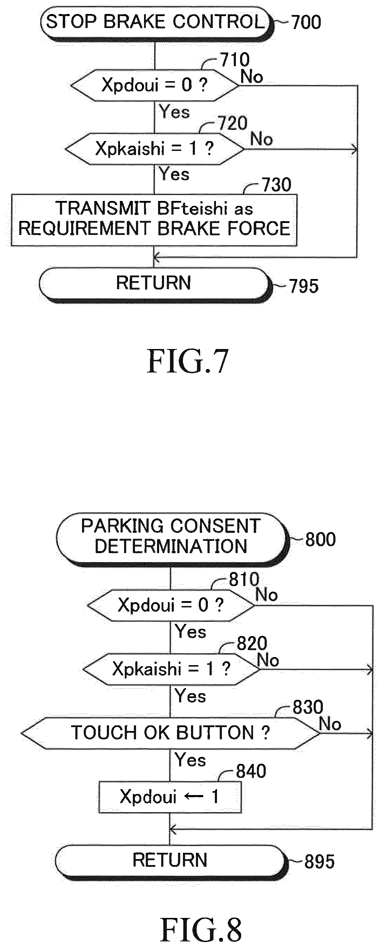

When a predetermined timing has come, the CPU starts processes from Step 400 shown in FIG. 4, and proceeds to Step 410 to determine whether or not a value of a parking consent flag Xpdoui is "0". The value of the parking consent flag Xpdoui is set to "0" through an initialization routine. The initialization routine is executed when the driver performs an operation for changing a position of an ignition key switch (now shown) of the vehicle VA from an off-position to an on-position. Furthermore, as described later, the value of the parking consent flag Xpdoui is set to "1" when the driver performs the operation on/to the OK button 320 while the parking start condition is being satisfied (in other words, while a parking start flag Xpkaishi is "1") (referring to Step 840 shown in FIG. 8).

When the value of the parking consent flag Xpdoui is "0", the CPU makes a "Yes" determination at Step 410 to proceed to Step 420. At Step 420, the CPU determines whether or not the vehicle speed Vs is equal to or lower than the threshold speed Vsth. It should be noted that the CPU calculates a rotation speed of each wheels based on the number of the pulse signals transmitted from the corresponding one of the wheel speed sensors 24 for/within a predetermined time. The CPU calculates the vehicle speed Vs based on an average value of the rotation speeds of the wheels.

When the vehicle speed Vs is higher than the threshold speed Vsth, the CPU makes a "No" determination at Step 420, and proceeds to Step 495 to tentatively terminate the present routine. After the vehicle VA starts decelerating and when the vehicle speed Vs is equal to or lower than the threshold speed Vsth, the CPU makes a "Yes" determination at Step 420 to proceed to Step 430.

At Step 430, the CPU searches for the parking area PA using camera images photographed by the camera sensors 21 and the obstacle information obtained from the clearance sonars, and proceeds to Step 495 to tentatively terminate the present routine. It should be noted that a method (searching method) of searching for the parking area PA is well-known. For example, "the searching method disclosed in one of Japanese Patent Application Laid-open No. 2015-3565, Japanese Patent Application Laid-open No. 2014-69645, Japanese Patent Application Laid-open No. 2016-2957, and Japanese Patent Application Laid-open No. 2016-84094" can be applied to the present embodiment.

When the driver performs the operation on/to the OK button 320 while the parking start condition is being satisfied, the parking consent flag Xpdoui is set to "1". When the CPU proceeds to Step 410 under the state described above, the CPU makes a "No" determination at Step 410, and proceeds to Step 495 to tentatively terminate the present routine.

### 2. Determination regarding Parking Start Condition

The CPU is configured to execute a routine (a parking start condition determination routine) represented by a flowchart shown in FIG. 5, every time a predetermined time elapses.

When a predetermined timing has come, the CPU starts processes from Step 500 shown in FIG. 5, and proceeds to Step 510 to determine whether or not the value of the parking start flag Xpkaishi is "0". The value of the parking start flag Xpkaishi is set to "0" through the initialization routine. The value of the parking start flag Xpkaishi is set to "1" when the parking start condition is satisfied (referring to Step 550 described later).

When the parking start flag Xpkaishi is "0", the CPU makes a "Yes" determination at Step 510 to proceed to Step 530.

The CPU determines whether or not the vehicle speed Vs is "0 km/h" (in other words, whether or not the vehicle VA has stopped) at Step 530. When the vehicle speed Vs is not "0 km/h", the CPU makes a "No" determination at Step 530, and proceeds to Step 595 to tentatively terminate the present routine. On the other hand, when the vehicle speed Vs is "0 km/h" at a time point when the CPU proceeds to Step 530, the CPU makes a "Yes" determination, and proceeds to Step 540.

The CPU determines whether or not the signal from the parking support button 28 changes from the low-level signal to the high-level signal at Step 540. When the signal from the parking support button 28 does not change from the low-level signal to the high-level signal, the driver performs no operation on/to the parking support button 28. In this case, the CPU makes a "No" determination at Step 540, and proceeds to Step 595 to tentatively terminate the present routine. The parking start condition is not satisfied when the CPU makes the "No" determination at Step 540, because the above described condition C2 is not satisfied (although the condition C1 is satisfied). Thus, in this case, the value of the parking start flag Xpkaishi is maintained at "0".

On the other hand, in the case where the signal from the parking support button 28 changes from the low-level signal to the high-level signal at the time point when the CPU proceeds to Step 540, the CPU detects the operation on/to the parking support button 28. Hereby, the parking start condition is satisfied because both of the above described conditions C1 and C2 are satisfied. In this case, the CPU makes a "Yes" determination at Step 540 to proceed to Step 550.

The CPU sets the value of the parking start flag Xpkaishi to "1" at Step 550 to proceed to Step 560. The CPU calculates the stop brake force BFteishi at Step 560, and proceeds to Step 595 to tentatively terminate the present routine. In more detail, the CPU calculates the stop brake force BFteishi for making the vehicle VA continue stopping (or for causing
based on the front-rear gradient angle represented by the signal from the gradient sensor 26. Furthermore, if the vehicle VA is an automatic transmission vehicle, the CPU may calculate the stop brake force BFteishi in consideration of driving force applied to the vehicle VA in a creep traveling state.

When the value of the parking start flag Xpkaishi is not "0", the CPU makes a "No" determination at Step 510, and directly proceed to Step 595 to tentatively terminate the present routine.

### 3. Display of parking frame screen

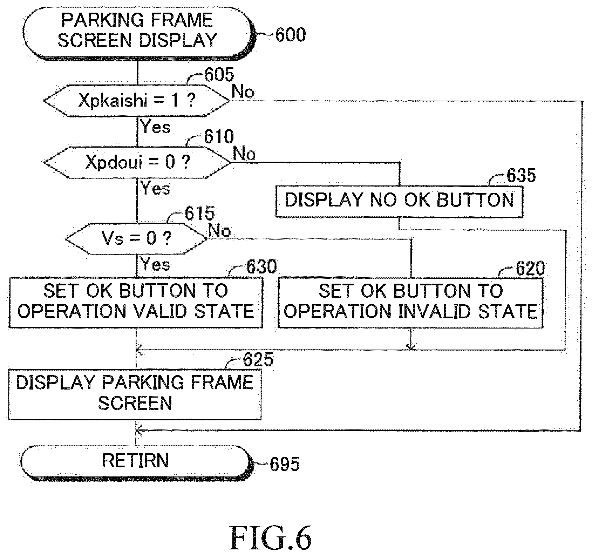

The CPU is configured to execute a routine (a parking frame screen display routine) represented by a flowchart shown in FIG. 6, every time a predetermined time elapses.

When a predetermined timing has come, the CPU starts processes from Step 600 shown in FIG. 6, and proceeds to Step 605 to determine whether or not the value of the parking start flag Xpkaishi is "1". When the value of the parking start flag Xpkaishi is "0", the CPU makes a "No" determination at Step 605, and proceeds to Step 695 to tentatively terminate the present routine.

On the other hand, when the value of the parking start flag Xpkaishi is "1", the CPU makes a "Yes" determination at Step 605 to proceed to Step 610. The CPU determines whether or not the value of the parking consent flag Xpdoui is "0" at Step 610.

When the value of the parking consent flag Xpdoui is "0", the CPU makes a "Yes" determination at Step 610 to proceed to Step 615. The CPU determines whether or not the vehicle speed Vs is "0 km/h" at Step 615. When the vehicle speed Vs is not "0 km/h", the CPU makes a "No" determination at Step 615 to proceed to Step 620. The CPU sets the OK button 320 to an operation invalid state at Step 620, and proceeds to Step 625. It should be noted that the CPU receives no signal from the OK button 320 which is in the operation invalid state.

The CPU displays the parking frame screen 300 on the touch panel 71 at Step 625, and proceeds to Step 695 to tentatively terminate the present routine. More specifically, the OK button 320 included in the parking frame screen 300 is displayed in the operation invalid state (in other words, in the state where the OK button 320 receives no touch operation). The OK button 320 whose state is set to the operation invalid state is displayed in such a manner that a frame line which defines the OK button 320 is a dotted line. Even if the driver touches the OK button 320 whose state is set to the operation invalid state, the CPU does not detect the operation on/to the OK button 320.

On the other hand, in the case where vehicle speed Vs becomes "0 km/h" at a time point when the CPU proceeds to Step 615, the CPU makes a "Yes" determination at Step 615 to proceed to Step 630. The CPU sets the OK button 320 to an operation valid state at Step 630, and proceeds to Step 625. It should be noted that the CPU can receive signal from the OK button 320 which is in the operation valid state, when the OK button 320 is touched/operated, so that the CPU detects the operation on/to the OK button 320.

At Step 625, the CPU displays the parking frame screen 300 on the touch panel 71, and proceeds to Step 695 to tentatively terminate the present routine. More specifically, the OK button 320 included in the parking frame screen 300 is displayed in the operation valid state (in other words, in the state where the OK button 320 can receive a touch operation). The OK button 320 whose state is set to the operation valid state is displayed in such a manner that the frame line which defines the OK button 320 is a solid line. When the driver touches the OK button 320 whose state is set to the operation valid state, the CPU detects the operation on/to the OK button 320.

On the other hand, in the case where the value of the parking consent flag Xpdoui is "1" at a time point when the CPU proceeds to Step 610, the CPU makes a "No" determination at Step 610 to proceed to Step 635. The CPU sets the OK button 320 to a non-display state at Step 635. Subsequently, the CPU proceeds to Step 625 to display the parking frame screen 300. In this case, the OK button 320 is not displayed in the parking frame screen. Thereafter, the CPU proceeds to Step 695 to tentatively terminate the present routine.

### 4. Stop brake control

The CPU is configured to execute a routine (a stop brake routine) represented by a flowchart shown in FIG. 7, every time a predetermined time elapses.

When a predetermined timing has come, the CPU starts processes from Step 700 shown in FIG. 7, and proceeds to Step 710 to determine whether or not the value of the parking consent flag Xpdoui is "0". When the parking consent flag Xpdoui is "0", the CPU makes a "Yes" determination at Step 710 to proceed to Step 720.

The CPU determines whether or not the value of the parking start flag Xpkaishi is "1" at Step 720. When the value of the parking start flag Xpkaishi is "0", the CPU makes a "No" determination at Step 720, and proceeds to Step 795 to tentatively terminate the present routine.

On the other hand, in the case where the value of the parking start flag Xpkaishi is "1" at a time point when the CPU proceeds to Step 720, the CPU makes a "Yes" determination at Step 720 to proceed to Step 730. The CPU transmits the stop brake force BFteishi as the required brake force to the brake ECU 40 at Step 730. Thereafter, the CPU proceeds to Step 795 to tentatively terminate the present routine.

The stop brake force BFteishi is calculated at Step 560 when the CPU determines that the parking start condition is satisfied through the parking start condition determination routine. The CPU transmits the stop brake force BFteishi as the required brake force to the brake ECU 40. On the other hand, as described above, the brake ECU 40 calculates the operation brake force BFsousa based on the brake pedal operation amount BP. When the operation brake force BFsousa is greater than the stop brake force BFteishi, the brake ECU 40 selects the operation brake force BFsousa as the final target brake force TBF. In contrast, when the operation brake force BFsousa is equal to or smaller than the stop brake force BFteishi, the brake ECU 40 selects the stop brake force BFteishi as the final brake force TBF. That is, the brake ECU 40 selects, as the final target brake force TBF, the operation brake force BFsousa or the stop brake force BFteishi, whichever is greater. Thereafter, the brake ECU 40 drives the brake actuator in such a manner that the brake force corresponding to the final target brake force TBF is generated. Accordingly, the brake force of the vehicle VA is equal to or greater than the stop brake force BFteishi, and thus, the vehicle VA continues stopping. The "control for transmitting the stop brake force BFteishi as the required brake force to the brake ECU 40 so as to let the brake force be equal to or greater than the stop brake force BFteishi" corresponds to the above described stop brake control.

On the other hand, in the case where the value of the parking consent flag Xpdoui is "1" at a time point when the CPU proceeds to Step 710, the CPU makes a "No" determination at Step 710, and proceeds to Step 795 to tentatively terminate the present routine. Therefore, the CPU executes the stop brake control repeatedly during a time from a time point when the parking start condition is satisfied (in other words, a time point when the value of the parking start flag Xpkaishi is set to "1") to a time point when the driver performs the operation on/to the OK button 320 (in other words, a time point when the value of the parking consent flag Xpdoui is set to "1").

### 5. Determination regarding Parking Consent Operation

The CPU is configured to execute a routine (a parking consent determination routine) represented by a flowchart shown in FIG. 8, every time a predetermined time elapses.

When a predetermined timing has come, the CPU starts processes from Step 800 shown in FIG. 8, and proceeds to Step 810 to determine whether or not the value of the parking consent flag Xpdoui is "0". When the parking consent flag Xpdoui is "0", the CPU makes a "Yes" determination at Step 810 to proceed to Step 820.

The CPU determines whether or not the value of the parking start flag Xpkaishi is "1" at Step 820. When the value of the parking start flag Xpkaishi is "0", the CPU makes a "No" determination at Step 820, and proceeds to Step 895 to tentatively terminate the present routine.

On the other hand, in the case where the value of the parking start flag Xpkaishi is "1" at a time point when the CPU proceeds to Step 820, the CPU makes a "Yes" determination at Step 820 to proceed to Step 830.

At Step 830, the CPU determines whether or not the driver has performed the operation on/to the OK button 320 in the parking frame screen 300 displayed on the touch panel 71. More specifically, when the display device 70 receives/detects an operation input from a position corresponding to the OK button 320, the display device 70 transmits a signal representing that to the PSECU 20. When the CPU receives that signal, the CPU determines that the driver has performed the operation on/to the OK button 320 (the CPU detects the operation on/to the OK button 320).

When the driver has not performed any operation on/to the OK button 320 yet, the CPU makes a "No" determination at Step 830, and proceeds to Step 895 to tentatively terminate the present routine. On the other hand, when the driver has performed the operation on/to the OK button 320, the CPU determines that the driver has performed the parking consent operation. In this case, the CPU makes a "Yes" determination at Step 830 to proceed to Step 840. The CPU sets the value of the parking consent flag Xpdoui to "1" at Step 840, and proceeds to Step 895 to tentatively terminate the present routine.

In the case where the value of the parking consent flag Xpdoui is "1" at a time point when the CPU proceeds to Step 810, the CPU makes a "No" determination at Step 810, and proceeds to Step 895 to tentatively terminate the present routine.

### 6. Automatic Parking Control

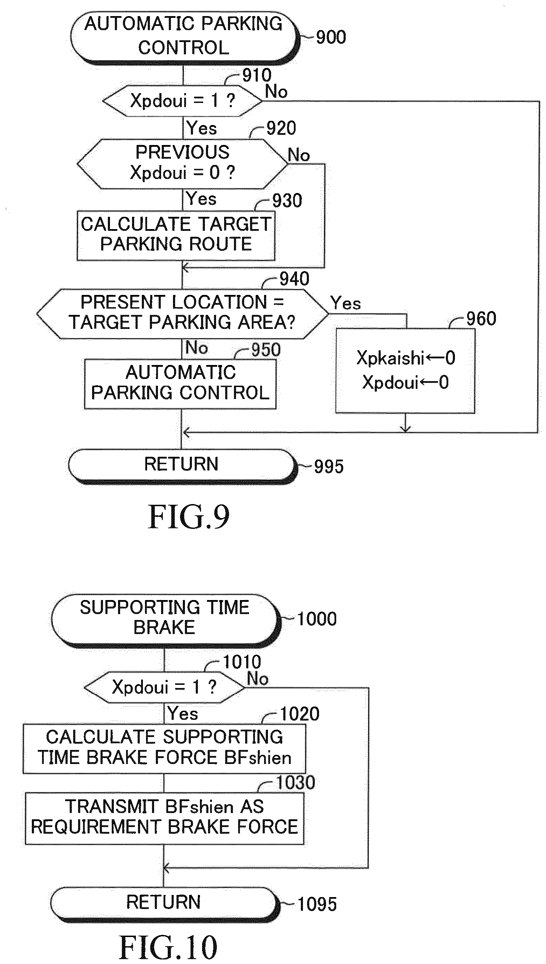

The CPU is configured to execute a routine (an automatic parking control routine) represented by a flowchart shown in FIG. 9, every time a predetermined time elapses.

When a predetermined timing has come, the CPU starts processes from Step 900 shown in FIG. 9, and proceeds to Step 910 to determine whether or not the value of the parking consent flag Xpdoui is "1". When the parking consent flag Xpdoui is "0", the CPU makes a "No" determination at Step 910, and proceeds to Step 995 to tentatively terminate the present routine.

On the other hand, in the case where the value of the parking consent flag Xpdoui is "1" at a time point when the CPU proceeds to Step 910, the CPU makes a "Yes" determination at Step 910 to proceed to Step 920.

At Step 920, the CPU determines whether or not the value of the parking consent flag Xpdoui (a previous parking consent flag Xpdoui) that was set at a time point when the CPU executed the present routine last time is "0". When the previous parking consent flag Xpdoui is "0", the CPU makes a "Yes" determination at Step 920 to proceed to Step 930.

The CPU calculates a target parking route indicative of a route from the present location of the vehicle VA to "a parking area PA into which the driver consents to park the vehicle VA (hereinafter, may be referred to as a "target parking area TPA")" at Step 930, and proceeds to Step 940. For example, the CPU calculates, as the target parking route, a route along which the vehicle can move/travel from the present location to the target parking area TPA while securing a sufficient distance equal to or longer than a predetermined distance between the vehicle VA and any of the obstacles. Such a calculation method of the target parking route is well-known. For example, the calculation method disclosed in one of Japanese Patent Application Laid-open No. 2015-3565, and Japanese Patent Application Laid-open No. 2016-84094" can be applied to the present embodiment.

The CPU determines whether or not the vehicle VA has reached the target parking area TPA at Step 940. More specifically, the CPU specifies a location/positional relationship between the vehicle VA and the target parking area TPA based on the camera images from the camera sensors 21 and the obstacle information from the clearance sonars to make the determination of Step 940 based on the specified location relationship.

When the vehicle VA has not reached the target parking area TPA, the CPU makes a "No" determination at Step 940 to proceed to Step 950. The CPU executes the automatic parking control for controlling the travel state of the vehicle VA in order to make the vehicle VA move/travel along the target parking route at Step 950, and proceeds to Step 995 to tentatively terminate the present routine.

More specifically, the CPU calculates "a target steered angle which is necessary for making the vehicle VA move/travel along the target parking route" (in other words, a target steered angle based on the location of the vehicle VA at a time point when the CPU proceeds to Step 950) through the automatic parking control. The CPU transmits the steering instruction including the calculated target steered angle to the steering ECU 30. Consequently, the steered angle of the vehicle VA is changed in such a manner that the steered angle coincides with the target steered angle.

Furthermore, the CPU calculates "a target throttle valve opening degree which is necessary for making the vehicle VA move/travel along the target parking route" (in other words, a target throttle valve opening degree based on the location of the vehicle VA at the time point when the CPU proceeds to Step 950). The CPU transmits the driving instruction including the calculated target throttle valve opening degree to the engine ECU 50. Consequently, the throttle valve opening degree is changed in such a manner that the throttle valve opening degree coincides with the target throttle valve opening degree.

When the CPU needs to reverse the vehicle VA, the CPU transmits, to the transmission actuator 60, an instruction for setting the gear position of the transmission 61 to a gear position for reversing the vehicle VA.

Furthermore, the CPU may determine a target vehicle speed which is an appropriate speed for making the vehicle VA move/travel along the target parking route, and determine the target throttle valve opening degree and/or the required brake force in such a manner that the actual vehicle speed Vs coincides with the target vehicle speed.

In the case where the value of the previous parking consent flag Xpdoui is "1" at a time point when the CPU proceeds to Step 920, the CPU makes a "No" determination at Step 920, and proceeds to Step 940 without proceeding to Step 930. Note, however, even if the value of the previous parking consent flag Xpdoui is "1", the CPU may proceed to Step 930 to calculate target parking route from the location of the vehicle at the present time point to the target parking area TPA.

In the case where the vehicle VA has reached the target parking area TPA at a time point when the CPU proceeds to Step 940, the CPU makes a "Yes" determination at Step 940 to proceed to Step 960. The CPU sets both of the parking start flag Xpkaishi and the parking consent flag Xpdoui to "1" so as to initialize those flags, and proceeds to Step 995 to tentatively terminate the present routine.

### 7. Supporting Time Brake Control

The CPU is configured to execute a routine (a supporting time brake control routine) represented by a flowchart shown in FIG. 10, every time a predetermined time elapses.

When a predetermined timing has come, the CPU starts processes from Step 1000 shown in FIG. 10, and proceeds to Step 1010 to determine whether or not the value of the parking consent flag Xpdoui is "1". When the parking consent flag Xpdoui is "0", the CPU makes a "No" determination at Step 1010, and proceeds to Step 1095 to tentatively terminate the present routine.

On the other hand, in the case where the value of the parking consent flag Xpdoui is "1" at a time point when the CPU proceeds to Step 1010, the CPU makes a "Yes" determination at Step 1010 to proceed to Step 1020.

The CPU calculates the appropriate value smaller than the stop brake force BFteishi calculated at Step 560 as the supporting time brake force BFshien at Step 1020 to proceed to Step 1030.

The CPU transmits the supporting time brake force BFshien as the required brake force to the brake ECU 40. Thereafter, the CPU proceeds to Step 1095 to tentatively terminate the present routine.

The brake ECU 40 selects, as the final target brake force TBF, the operation brake force BFsousa or the supporting time brake force BFshien, whichever is greater. As a result, the brake force of the vehicle VA is equal to or greater than the supporting time brake force BFshien. Therefore, the vehicle VA can move/travel smoothly. The control for transmitting the supporting time brake force BFshien as the required brake force to the brake ECU 40 in order to maintain the brake force equal to or greater than the supporting time brake force BFshien corresponds to the above described supporting time brake control.

As understood from the above described example, the first device 10 displays the parking frame screen 300 when the driver performs the operation on/to the parking support button 28 (when the parking start condition is satisfied). When the driver consents to park the vehicle VA into the parking area PA represented by the parking frame 312 displayed in the parking frame screen 300 by looking at the parking frame screen 300, the driver touches the OK button 320. The first device 10 executes the stop brake control for applying the stop brake force BFteishi to the vehicle VA during the time period from the time point when the parking start condition is satisfied to the time point when the driver performs the operation on/to the OK button 320. Therefore, even if the driver weakens the step force applied to the brake pedal 42 unintentionally while the driver is looking at the parking frame screen 300, the vehicle VA can continue stopping (does not start moving).

### <First Modification Example>

The parking support device 10 according to a first modification example is referred to as a first modification device. The first modification device is different from the first device 10 only in the following two points.
- When the first modification device detects the operation on/to the parking support button 28, the first modification device starts searching for the parking area PA regardless of the vehicle speed Vs.
- When the vehicle speed Vs becomes "0 km/h" after the first modification device detects the operation on/to the parking support button 28, the first modification device determines that the parking start condition is satisfied.

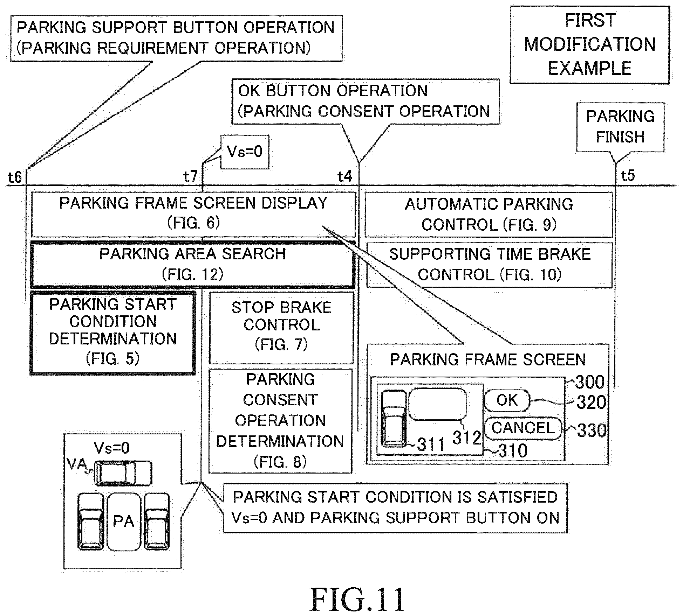

More specifically, as illustrated in FIG. 11, when the driver performs the operation on/to the parking support button 28 at a time point t6, the first modification device starts searching for the parking area PA, and starts determining whether or not the parking start condition is satisfied. The first modification device starts displaying the parking frame screen 300 at the time point t6. At the time point t6, the condition C2 is satisfied, and the condition C1 is not satisfied, because the vehicle speed Vs is higher than "0 km/h".

Thereafter, when the vehicle speed Vs becomes "0 km/h" (the vehicle stops) at a time point t7, both of the conditions C1 and C2 are satisfied. Accordingly, the parking start condition is satisfied at the time point t7. Therefore, the first modification device starts executing the stop brake control, and determining whether or not the driver performs the operation on/to the OK button 320, similarly to the first device 10.

Thereafter, when the driver performs the operation on/to the OK button 320 at the time point t4, the first modification device starts operating, similarly to the first device 10.

### (Specific Operation)

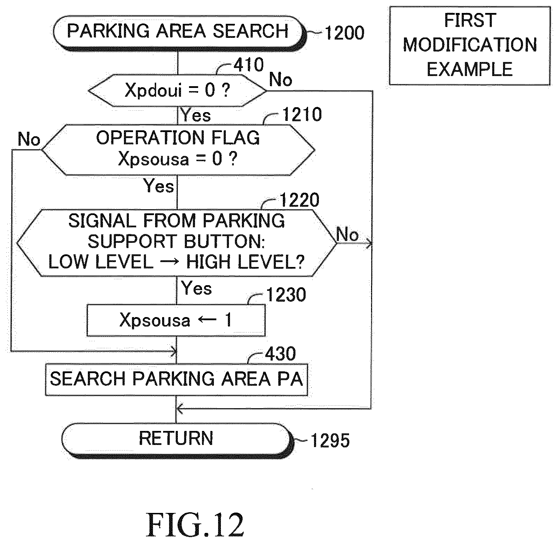

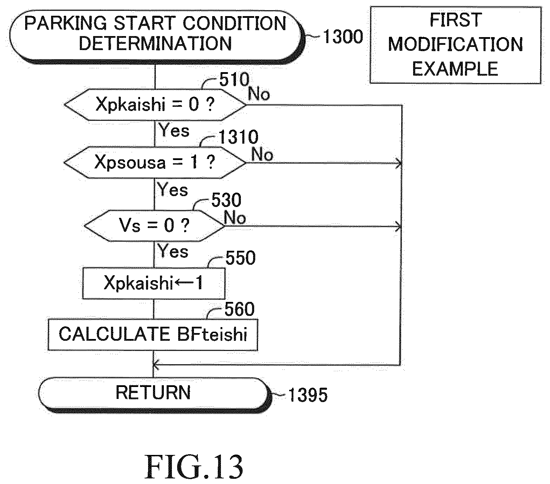

The CPU of the first modification device executes a routine represented by a flowchart in FIG. 12 in place of the routine represented by the flowchart in FIG. 4, a routine represented by a flowchart in FIG. 13 in place of the routine represented by the flowchart in FIG. 5, and the routines represented by the flowcharts in FIGs. 6 through 10, every time a predetermined time elapses. The routines shown in FIGs. 6 through 10 have already been described. Accordingly, an operation of the first modification device according to "a parking area search routine" shown in FIG. 12 and "a parking start condition determination routine" shown in FIG. 13 will next be described. In FIGs. 12 and 13, the same Steps as the Steps shown in FIGs. 4 and 5 are denoted with common step symbols for the Steps shown in FIGs. 4 and 5, and description thereof is omitted, respectively.

### 1. Start Searching For Parking Area PA

When a predetermined timing has come, the CPU starts processes from Step 1200 shown in FIG. 12. In the case where the value of the parking consent flag Xpdoui is "0", the CPU proceeds to Step 1210, at which the CPU determines whether or not a value of an operation flag Xpsousa is "0". The value of the operation flag Xpsousa is set to "0" through the initialization routine and at Step 960 in the routine shown in FIG. 9. As described later, the value of the operation flag Xpsousa is set to "1" when the signal from the parking supporting button 28 changes from the low-level signal to the high-level signal.

When the value of the operation flag Xpsousa is "0", the CPU makes a "Yes" determination at Step 1210 to proceed to Step 1220. The CPU determines whether or not the signal from the parking support button 28 has changed from the low-level signal to the high-level signal at Step 1220.

When the signal from the parking support button 28 has not changed from the low-level signal to the high-level signal, the CPU makes a "No" determination at Step 1220, and proceeds to Step 1295 to tentatively terminate the present routine.

On the other hand, in the case where the signal from the parking support button 28 has changed from the low-level signal to the high-level signal when the CPU proceeds to Step 1220, the CPU makes a "Yes" determination at Step 1220 to proceed to Step 1230. The CPU sets the value of the operation flag Xpsousa to "1" at Step 1230 to proceed to Step 430. The CPU searches for the parking area PA at Step 430, and proceeds to Step 1295 to tentatively terminate the present routine.

In the case where the value of the operation flag Xpsousa is "1" at a time point when the CPU proceeds to Step 1210, the CPU makes a "No" determination at Step 1210 to proceed to Step 430.

In the case where the value of the parking consent flag Xpdoui is "1" at a time point when the CPU proceeds to Step 410 shown in FIG. 12, the CPU makes a "No" determination at Step 410, and proceeds to Step 1295 to tentatively terminate the present routine.

### 2. Determination regarding Parking Start Condition

When a predetermined timing has come, the CPU starts processes from Step 1300 shown in FIG. 13. In the case where the value of the parking start flag Xpkaishi is "0", the CPU proceeds to Step 1310 to determine whether or not the value of the operation flag Xpsousa is "1".

When the value of the operation flag Xpsousa is not "1", in other words, when the value of the operation flag Xpsousa is "0", the CPU makes a "No" determination at Step 1310, and proceeds to Step 1395 to tentatively terminate the present routine.

On the other hand, in the case where the value of the operation flag Xpsousa is "1" at a time point when the CPU proceeds to Step 1310, the CPU makes a "Yes" determination at Step 1310 to proceed to Step 530. When the vehicle speed Vs is not "0 km/h", the CPU makes a "No" determination at Step 530, and proceeds to Step 1395 to tentatively terminate the present routine. When the vehicle speed Vs is "0 km/h", the CPU makes a "Yes" determination at Step 530, sets the value of the parking start flag Xpkaishi to "1" at Step 550, calculates the stop brake force BFteishi at Step 560, and proceeds to Step 1395 to tentatively terminate the present routine.

As understood from the above described example, through executing the routine shown in FIG. 13, the CPU determines whether or not the vehicle speed Vs is "0 km/h" (that is, whether or not the condition C1 is satisfied), after the driver performed the operation on/to the parking support button 28 so that the value of the operation flag Xpsousa has been set to "1" (that is, after the condition C2 became satisfied). Accordingly, if the vehicle speed Vs does not become "0 km/h" after the driver performed the operation on/to the parking support button 28, the CPU does not determine that the parking start condition is satisfied. Hereby, when the driver wants the parking start condition to be satisfied, the driver drives the vehicle VA in such manner that the vehicle speed Vs becomes "0 km/h" after the driver performs the operation on/to the parking support button 28.

The CPU may set the value of the operation flag Xpsousa to "0", when the vehicle speed Vs does not become "0 km/h" during a time period from a operation time point when the value of the operation flag Xpsousa is set to "1" to a time point when a predetermined time elapses from the above operation time point.

### <Second Modification Example>

The parking support device 10 according to a second modification example is referred to as a second modification device. The second modification device is different from the first device 10 only in that the second modification device determines that the driver has performed the parking consent operation when the brake pedal operation amount BP has become equal to or smaller than a threshold operation amount BP1th, through the parking consent determination routine.

### (Specific Operation)

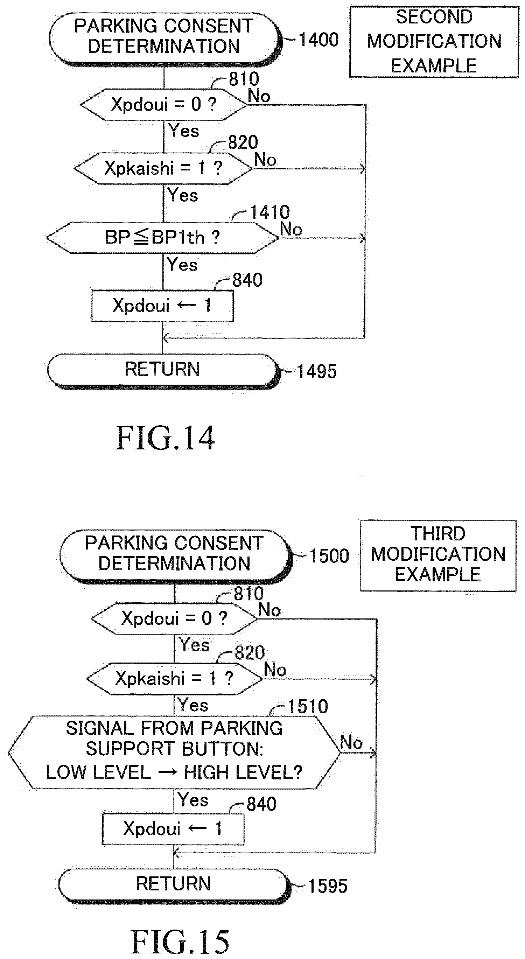

The CPU of the second modification device executes the routines represented by the flowcharts in FIGs. 4 through 10 except for the routine represented by the flowchart in FIG. 8, and executes a routine represented by a flowchart in FIG. 14 in place of the routine represented by the flowchart in FIG. 8, every time a predetermined time elapses. Hereinafter, a parking consent determination routine shown in FIG. 14 will be described. In FIG. 14, the same Steps as the Steps shown in FIG. 8 are denoted with common step symbols for the Steps shown in FIG. 8, and description thereof is omitted.

### 5. Determination regarding Parking Consent Operation

When a predetermined timing has come, the CPU starts processes from Step 1400. In the case where the value of the parking start flag Xpkaishi is "1" at a time point when the CPU execute Step 820 shown in FIG. 14, the CPU makes a "Yes" determination at Step 820 to proceed to Step 1410. The CPU determines whether or not the brake pedal operation amount BP has changed from a value greater than a threshold operation amount BP1th to a value equal to or smaller than the threshold operation amount BP1th, at Step 1410.

It should be noted that the threshold operation amount BP1th has been set to a brake pedal operation amount BP which makes the operation brake force BFsousa be equal to a "predetermined threshold brake force BF1th which is smaller than the stop brake force BFteishi". The threshold operation amount BP1th has been set to a value representing that the driver weakens the step force applied to the brake pedal 42 in order to have the vehicle VA start moving/traveling when consenting to park the vehicle VA into the parking area PA.

When the brake pedal operation amount BP has not changed from the value greater than the threshold operation amount BP1th to the value equal to or smaller than the threshold operation amount BP1th, the CPU makes a "No" determination at Step 1410, and proceeds to Step 1495 to tentatively terminated the present routine. On the other hand, in the case where the brake pedal operation amount BP has changed from the value greater than the threshold operation amount BP1th to the value equal to or smaller than the threshold operation amount BP1th at a time point when the CPU proceeds to Step 1410, the CPU makes a "Yes" determination at Step 1410 to proceed to Step 840. The CPU sets the value of the parking consent flag Xpdoui to "1" at Step 840, and proceeds to Step 1495 to tentatively terminate the present routine.

As understood from the above example, when the driver weakens the step force applied to the brake pedal 42 in such a manner that the brake pedal operation amount BP changes the value greater than the threshold operation amount BP1th to the value equal to or smaller than the threshold operation amount BP1th, in place of performing the operation on/to the OK button 320, the second modification device determines that the driver performs the parking consent operation.

In this modification example, the OK button 320 is not displayed in the parking frame screen 300. Therefore, Step 615, Step 620, and Step 630 are not executed.

It should be noted that, in the routine shown in FIG. 14, the CPU may proceed to Step 1410 when the vehicle speed Vs is "0 km/h" and the brake pedal operation amount BP is greater than the threshold operation amount BP1th after the CPU makes a "Yes" determination at Step 820.

### <Third Modification Example>

The parking support device 10 according to a third modification example is referred to as a third modification device. The third modification device is different from the first device 10 only in that the third modification device determines that the driver has performed the parking consent operation when the driver has performed the operation on/to the parking support button 28 after the parking start condition is satisfied, through the parking consent determination routine.

### (Specific Operation)

The CPU of the third modification device executes the routines represented by the flowcharts in FIGs. 4 through 10 except for the routine represented by the flowchart in FIG. 8, and executes a routine represented by a flowchart in FIG. 15 in place of the routine represented by the flowchart in FIG. 8, every time a predetermined time elapses. Hereinafter, a parking consent determination routine shown in FIG. 15 will be described. In FIG. 15, the same Steps as the Steps shown in FIG. 8 are denoted with common step symbols for the Steps shown in FIG. 8, and description thereof is omitted.

### 5. Determination regarding Parking Consent Operation

When a predetermined timing has come, the CPU starts processes from Step 1500. Thereafter, in the case where the value of the parking start flag Xpkaishi is "1" at a time point when the CPU proceeds to Step 820 shown in FIG. 15, the CPU makes a "Yes" determination at Step 820 to proceed to Step 1510. The CPU determines whether or not the signal from the parking support button 28 has changed from the low-level signal to the high-level signal at Step 1510.

When the signal from the parking support button 28 has not changed from the low-level signal to the high-level signal, the CPU makes a "No" determination at Step 1510, and proceeds to Step 1595 to tentatively terminate the present routine. On the other hand, in the case where the signal from the parking support button 28 has changed from the low-level signal to the high-level signal at a time point when the CPU proceeds to Step 1510, the CPU makes a "Yes" determination at Step 1510 to proceed to Step 840. The CPU sets the value of the parking consent flag Xpdoui to "1" at Step 840, and proceeds to Step 1595 to tentatively terminate the present routine.

As understood from the above example, when the driver performs the operation on/to the parking support button 28 in stead of the OK button 320 after the parking start condition is satisfied, the third modification device determines that the driver has performed the parking consent operation.

In this modification example, the OK button 320 is not displayed in the parking frame screen 300, similarly to the second modification example. Therefore, Step 615, Step 620, and Step 630 are not executed.

Various modification examples regarding the parking consent operation are possible. For example, when the operation amount (an acceleration pedal operation amount AP) of the acceleration pedal (not shown) has changed from a value equal to or smaller than a threshold operation amount AP1th to a value greater than the threshold operation amount AP1th, the CPU detects that operation on/to the acceleration pedal as the parking consent operation.

### <Second Embodiment>

A second embodiment will next be described with reference to FIGs. 16 through 19. The parking support device 10 is referred to as a second device. The second device is different from the first device 10 only in that the second device executes an automatic leaving control for controlling the travel state of the vehicle VA such that the vehicle VA leaves the parking area PA (the parking area where the vehicle has been parked) automatically. Hereinafter, the difference will be described mainly.

The vehicle has been parallelly parked in the parking area PA in shown in FIG. 16 before a time point t11 shown in FIG. 16. A parallel parking means that a parking method in such a manner that the front-rear direction of the vehicle VA observed before the parking starts is parallel to the front-rear direction of the vehicle VA observed when the parking finishes.

The vehicle VA continues being parked, in other words, the vehicle speed Vs of the vehicle VA continues being "0 km/h" during a time period from a time point (not shown) when the parallel parking finishes to a time point t13 when the automatic leaving control described later starts. When the driver has performed the operation on the leaving support button 29 at the time point t11, the second device starts displaying a leaving direction screen 1600. The leaving direction screen 1600 is displayed on the touch panel 71.

The leaving direction screen 1600 includes a direction selection area 1610, an OK button 1620, and a cancel button 1630. A left arrow 1611, a right arrow 1612, and a vehicle image/icon 1613 representing the vehicle VA are displayed in the direction selection area 1610.

When the driver wants the vehicle VA to leave the parking area PA in the left direction, the driver touches the left arrow 1611. When the driver wants the vehicle VA to leave the parking area PA in the right direction, the driver touches the right arrow 1612. When the driver consents to leave the parking area PA in the direction corresponding to the touched arrow after the driver touched any one of the arrows, the driver touches the OK button 1620. When the driver cancels the automatic leaving control, the driver touches the cancel button 1630. When the driver performs a touch operation on any one of the arrows 1611 and 1612, and the buttons 1620 and 1630, the display device 70 receives the touch operation on/to transmit a signal representing that to the PSECU 20.

Assuming that the vehicle speed Vs is "0 km/h" at the time point t11, both of the following conditions C3 and C4 are satisfied. That is, a leaving start condition is satisfied.

Condition C3: The vehicle speed Vs is "0 km/h". That is, the vehicle VA has stopped.

Condition C4: The driver performs an operation on the leaving support button 29.

When the leaving start condition is satisfied, the second device executes a stop brake control by executing a stop brake control routine (not shown) similar to the stop brake control routine executed by the first device 10. Furthermore, the second device determines whether or not the driver has performed the operation on the OK button 1620 by executing a leaving consent determination routine (not shown) similar to the parking consent determination routine executed by the first device 10.

When the driver selects the leaving direction by touching the right arrow 1612 at the time point t12, and the driver touches the OK button 1620 at the time point t13, the second device determines that the driver has performed the leaving consent operation representing that the driver consents that the vehicle VA leaves the parking area PA, and stops/finish the stop brake control. Furthermore, the second device starts executing the automatic leaving control to transmit instructions to the steering ECU 30 and the engine ECU 50 at the time point t13, the automatic leaving control being for letting the vehicle VA leave the parking area PA. Furthermore, at the time point t13, the second device starts executing a supporting time brake control by executing a supporting time brake control routine (not shown) similar to the supporting brake control routine executed by the first device 10. When the vehicle VA finished leaving the parking area PA at the time point t14, the second device finishes the automatic leaving control and the supporting time brake control.

### (Specific Operation)

### 8. Determination regarding Leaving Start Condition

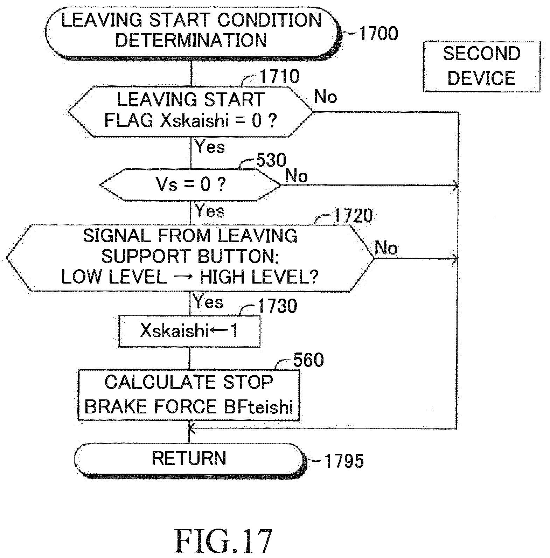

The CPU executes a routine (a leaving start condition determination routine) represented by a flowchart in FIG. 17, every time a predetermined time elapses. In FIG. 17, the same Steps as the Steps shown in FIG. 5 are denoted with common step symbols for the Steps shown in FIG. 5, and description thereof is omitted.

When a predetermined timing has come, the CPU starts processes from Step 1700 shown in FIG. 17, and proceeds to Step 1710 to determine whether or not a value of a leaving start flag Xskaishi is "0". The value of the leaving start flag Xskaishi is set to "0" through the initialization routine. The value of the leaving start flag Xskaishi is set to "1" (referring to Step 1730) when the above described leaving start condition becomes satisfied (both of the conditions C3 and C4 are satisfied).

When the value of the leaving start flag Xskaishi is "0", the CPU makes a "Yes" determination at Step 1710 to proceed to Step 530 shown in FIG. 17. When the vehicle speed Vs is not "0 km/h", the CPU makes a "No" determination at Step 530, and proceeds to Step 1795 to tentatively terminate the present routine. On the other hand, in the case where the vehicle speed Vs is "0 km/h" at a time point when the CPU proceeds to Step 530, the CPU makes a "Yes" determination at Step 530 to proceed to Step 1720.

The CPU determines whether or not the signal from the leaving support button 29 has changed from the low-level signal to the high-level signal at Step 1720. When the signal from the leaving support button 29 has not changed from the low-level signal to the high-level signal, the CPU makes a "No" determination at Step 1720, and proceeds to Step 1795 to tentatively terminate the present routine.

On the other hand, in the case where the signal from the leaving support button 29 has changed from the low-level signal to the high-level signal when the CPU proceeds to Step 1720, the CPU makes a "Yes" determination at Step 1720 to proceed to Step 1730.

The CPU sets the value of the leaving start flag Xskaishi to "1" at Step 1730, calculates the stop brake force BFteishi at Step 560, and proceeds to Step 1795 to tentatively terminate the present routine.

In the case where the value of the leaving start flag Xskaishi is "1" at a time point when the CPU proceeds to Step 1710, the CPU makes a "No" determination at Step 1710, and proceeds to Step 1795 to tentatively terminate the present routine.

### 9. Display Leaving Direction Screen

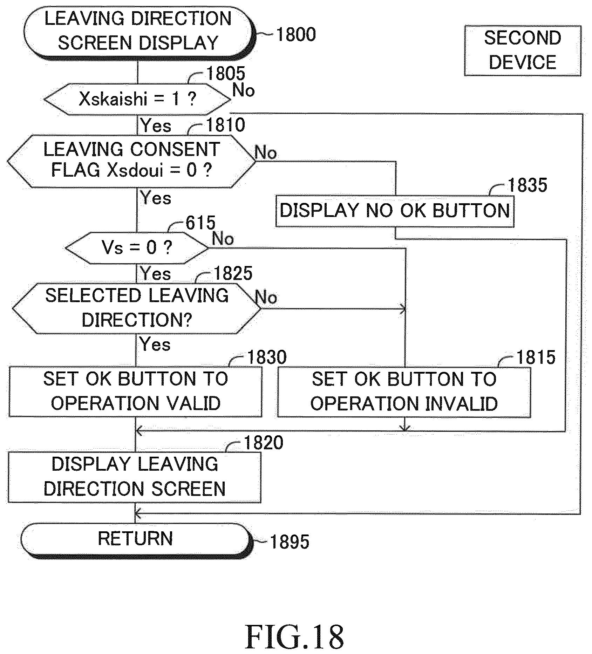

The CPU executes a routine (a leaving direction screen display routine) represented by a flowchart in FIG. 18, every time a predetermined time elapses. In FIG. 18, the same Steps as the Steps shown in FIG. 6 are denoted with common step symbols for the Steps shown in FIG. 6, and description thereof is omitted.

When a predetermined timing has come, the CPU starts processes from Step 1800 shown in FIG. 18, and proceeds to Step 1805 to determine whether or not the value of the leaving start flag Xskaishi is "1". When the value of the leaving start flag Xskaishi is "0", the CPU makes a "No" determination at Step 1805, and proceeds to Step 1895 to tentatively terminate the present routine.

On the other hand, when the value of the leaving start flag Xskaishi is "1", the CPU makes a "Yes" determination at Step 1805 to proceed to Step 1810. The CPU determines whether or not the value of a leaving consent flag Xsdoui is "0" at Step 1810. The value of the leaving consent flag Xsdoui is set to "0" through the initialization routine. The value of the leaving consent flag Xsdoui is set to "1" through the leaving consent determination routine (not shown), when the CPU determines that the driver has performed the operation on the OK button 1620.

When the value of the leaving consent flag Xsdoui is "0", the CPU makes a "Yes" determination at Step 1810 to proceed to Step 615. When the vehicle speed Vs is not "0 km/h", the CPU makes a "No" determination at Step 615 to proceed Step 1815. The CPU sets a state of the OK button 1620 displayed in the leaving direction screen 1600 to an operation invalid state to proceed to Step 1820. The OK button which has been set to the operation invalid state is displayed in such a manner that a frame line which defines the OK button 1620 is a dotted line. Even if the driver touches the OK button 1620 which has been set to the operation invalid state, the CPU does not detect the operation on the OK button 1620. The CPU displays the leaving direction screen 1600 (referring to FIG. 16) on the touch panel 71 at step 1820, and proceeds to Step 1895 to tentatively terminate the present routine.

In the case where the vehicle speed Vs is "0 km/h" at a time point when the CPU proceeds to Step 615, the CPU makes a "Yes" determination at Step 615 to proceed to Step 1825. The CPU determines whether or not the driver has selected the leaving direction at Step 1825. More specifically, the CPU determines whether or not the driver performed the operation on any one of the left arrow 1611 and the right arrow 1612 for a time period between "a time point before a predetermined time from the present time point" and the present time point.

When the driver has already selected the leaving direction, the CPU makes a "Yes" determination at Step 1825 to proceed to Step 1830. At Step 1830, the CPU sets the state of the OK button 1620 displayed in the leaving direction screen 1600 to an operation valid state, and proceeds to Step 1820 to display the leaving direction screen 1600 on the touch panel 71. Thereafter, the CPU proceeds to Step 1895 to tentatively terminate the present routine. The OK button 1620 which has been set to the operation valid state is displayed in such a manner that the frame line which defines the OK button 1620 is a solid line. When the driver touches the OK button 1620 which has been set to the operation valid state, the CPU detects the operation on the OK button 1620.

On the other hand, in the case where the driver has not selected the leaving direction at a time point when the CPU proceeds to Step 1825, the CPU makes a "No" determination at Step 1825 to proceed to Step 1815. As a result, the OK button 1620 which has been set to the operation invalid state is displayed on the leaving direction screen 1600.

In the case where the value of the leaving consent flag Xsdoui is "1" at a time point when the CPU proceeds to Step 1810, the CPU makes a "No" determination at Step 1810 to proceed to Step 1835. The CPU sets the state of the OK button 1620 to a non-display state at Step 1835, and proceeds to Step 1820 to display the leaving direction screen 1600 on the touch panel 71. As a result, the OK button 1620 is not displayed on the leaving direction screen 1600. Thereafter, the CPU proceeds to Step 1895 to tentatively terminate the present routine.

### 10. Stop Brake Control

The CPU executes a stop brake control routine (not shown), every time a predetermined time elapses. The stop brake control routine is achieved by replacing the parking consent flag Xpdoui in the flowchart shown in FIG. 7 with the leaving consent flag Xsdoui and by replacing the parking start flag Xskaishi in the flowchart shown in FIG. 7 with the leaving start flag Xskaishi. Therefore, description thereof is omitted. It should be noted that the CPU executes a stop brake control for maintaining the brake force at a value equal to or greater than the stop brake force BFteishi through executing a process of Step (not shown) corresponding to Step 730 shown in FIG. 7.

### 11. Determination regarding Leaving Consent Operation

The CPU executes a leaving consent determination routine (not shown), every time a predetermined time elapses. The leaving consent determination routine is achieved by replacing the parking consent flag Xpdoui in the flowchart shown in FIG. 8 with the leaving consent flag Xsdoui and by replacing the parking start flag Xskaishi in the flowchart shown in FIG. 8 with the leaving start flag Xskaishi. Therefore, description thereof is omitted.

### 12. Automatic Leaving Control

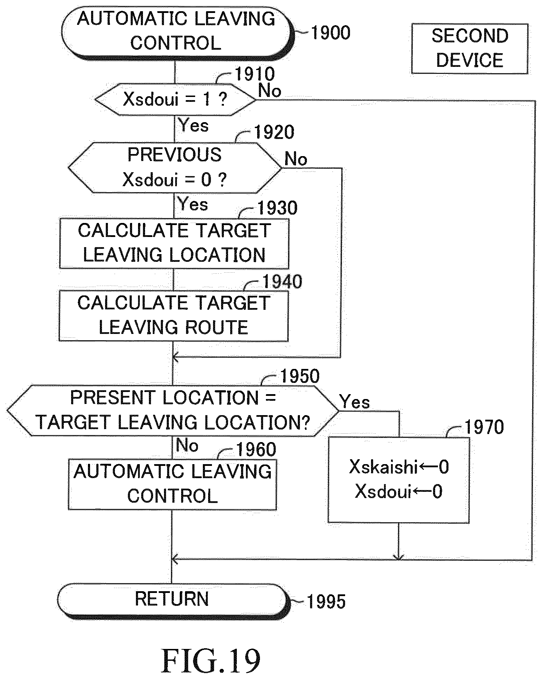

The CPU executes a routine (an automatic leaving control routine) represented by a flowchart in FIG. 19, every time a predetermined time elapses.

When a predetermined timing has come, the CPU starts processes from Step 1900 shown in FIG. 19, and proceeds to Step 1910 to determine whether or not the value of the leaving consent flag Xsdoui is "1". When the value of the leaving consent flag Xsdoui is "0", the CPU makes a "No" determination at Step 1910 and proceeds to Step 1995 to tentatively terminate the present routine.

On the other hand, in the case where the value of the leaving consent flag Xsdoui is "1" at a time point when the CPU proceeds to Step 1910, the CPU makes a "Yes" determination at Step 1910 to proceed to Step 1920.

At Step 1920, the CPU determines whether or not the value of the leaving consent flag Xsdoui (a previous leaving consent flag Xsdoui) set at a time point when the CPU executed the present routine last time is "0". When the previous leaving consent flag Xsdoui is "0", the CPU makes a "Yes" determination at Step 1920 to proceed to Step 1930.

The CPU calculates a target leaving location (target location to which the vehicle VA moves after leaving the parking area) at Step 1930 to proceed to Step 1940. The CPU calculates a target leaving route which is a route along which the vehicle VA moves/travels though the automatic leaving control at Step 1940 to proceed to Step 1950. The calculation of the target leaving location, and the calculation of the target leaving route are well-known. For example, the calculation method of those that are disclosed in Japanese Patent Application Laid-open No. 2016-06027 can be applied to the present embodiment.

The CPU determines whether or not the vehicle VA has reached the target leaving location at Step 1950. More specifically, the CPU specifies a location/positional relationship between the vehicle VA and the target leaving location based on the camera images from the camera sensors 21 and the obstacle information from the clearance sonars, in order to determine whether or not the vehicle VA has reached the target leaving location.

When the vehicle VA has not reached the target leaving location, the CPU makes a "No" determination at Step 1950 to proceed to Step 1960. The CPU executes the automatic leaving control for controlling the travel state of the vehicle VA in order to make the vehicle VA move/travel along the target leaving route at Step1960, and proceeds to Step 1995 to tentatively terminate the present routine. The CPU transmits the instructions to the steering ECU 30 and the engine ECU 50, and controls the transmission actuator 60 through the automatic leaving control, similarly to the automatic parking control. Furthermore, the CPU may set the appropriate target vehicle speed so as to determine the target throttle valve opening degree and/or the required brake force in such a manner that the actual vehicle speed Vs coincides with the target vehicle speed.

In the case where the value of the previous leaving consent flag Xsdoui is "1" at a time point when the CPU proceeds to Step 1920, the CPU makes a "No" determination at Step 1920, and proceed to Step 1950 without executing Steps 1930 and 1940. The CPU may calculate the target leaving location and the target leaving route base on the present location of the vehicle VA, every time the CPU makes a "Yes" determination at Step 1910.

In the case where the vehicle VA has reached the target leaving location at a time point when the CPU proceeds to Step 1950, the CPU makes a "Yes" determination at Step 1950 to proceed to Step 1970. The CPU initializes the leaving start flag Xskaishi and the leaving consent flag Xsdoui by setting the values of those flags to "0", and proceeds to Step 1995 to tentatively terminate the present routine.

### 13. Supporting Time Brake Control

The CPU executes a supporting time brake control routine (not shown), every time a predetermined time elapses. The supporting time brake control routine is achieved by replacing the parking consent flag Xpdoui in the flowchart shown in FIG. 10 with the leaving consent flag Xsdoui and by replacing the parking start flag Xskaishi in the flowchart shown in FIG. 10 with the leaving start flag Xskaishi. Therefore, description thereof is omitted.

As understood from the above described example, the second device executes during a time period from a time point when the leaving start condition is satisfied to a time point when the driver perform the operation on the OK button 1620. Therefore, even if the driver weakens the step force applied to the brake pedal 42 unintentionally while the driver is looking at the leaving direction screen 1600, and/or while the driver is inputting the leaving direction on the leaving direction screen 1600, the second device can keep the vehicle VA stopping.

The leaving consent operation of the second device is not limited to the operation on the OK button 1620, similarly to the parking consent operation of the first device 10. For example, when the driver weakens the step force applied to the brake pedal 42 instead of the performing the operation on the OK button 1620, the second device may detect the operation on the brake pedal 42 (i.e., weakening the step force) as the leaving consent operation. More specifically, a routine for such a modification example is achieved by replacing the parking consent flag Xpdoui in the flowchart shown in FIG. 14 with the leaving consent flag Xsdoui, and by replacing the parking start flag Xpkaishi in the flowchart shown in FIG. 14 with the leaving start flag Xskaishi. Therefore, description thereof is omitted.

Further, when the driver performs the operation on the leaving support button 29 instead of the operation on the OK button 1620, the second device may detect such an operation as the leaving consent operation. More specifically, a routine for such a modification example is achieved by replacing the parking consent flag Xpdoui in the flowchart shown in FIG. 15 with the leaving consent flag Xsdoui, and by replacing the parking start flag Xpkaishi in the flowchart shown in FIG. 15 with the leaving start flag Xskaishi. Therefore, description thereof is omitted.

Furthermore, when the operation amount of the acceleration pedal (not shown) (the acceleration pedal operation amount AP) changes from the value equal to or smaller than the threshold operation amount AP1th to the value greater than the threshold operation amount AP1th, the second device may detect such an operation on the acceleration pedal as the leaving consent operation.

The second device may have a function of the first device. The second device needs not to comprise the parking support button 28 and the leaving support button 29 separately, but may comprise one (a single) support button (not shown), instead. In this case, when a state where no operation on the support button is performed continues for a predetermined time after the driver performs an ON-operation (a first ON-operation) on the support button once, the second device may determine that the driver has performed the parking support button 28. On the other hand, when the driver performs the second ON-operation on the support button before a predetermined time elapses after the driver performs the first ON-operation on the support button, and a state where the driver performs no operation on the support button continues for the predetermined time after the second ON-operation, the second device determines that the driver has performed the operation on the leaving support button 29.

The present invention is not limited to the above described embodiments, and can adopt various modifications within a scope of the appended claims.

A maximum value of the brake force (the maximum brake force BFmax) which the brake actuator 43 can apply to the vehicle VA may be adopted as the stop brake force BFteishi. In this case, the CPU needs not to calculate the stop brake force BFteishi at Steps 560 and 645.

A process at Step 1410 is not limited to the process that the CPU compares the brake pedal operation amount BP with the threshold operation amount BP1th. For example, at Step 1410, the CPU may compare the operation brake force BFsousa with the threshold brake force BFsousa. It should be noted that the CPU acquires the operation brake force BFsousa from the brake ECU 40.

The above embodiment is not limited to the above described example where the driver touches the touch panel 71 in order to directly perform the operation on the parking frame screen 300 shown in FIG. 3 and the leaving direction screen 1600 shown in FIG. 16 which are displayed on the touch screen 71. For example, the parking frame screen 300 and the leaving direction screen 1600 may be displayed on a normal display which is not the touch panel 71. In this case, the driver performs an operation on some input device (e.g. a touch pad, a direction button, or the like) in order to indirectly perform the operation on those screens. The driver performs the operation on such an input device to perform the operation on the OK button 320 (1620), the cancel button 330 (1630), the left arrow 1611, or the right arrow 1612.

In the above example, the CPU starts displaying the parking frame screen 300 at a time point when the value of the parking start flag Xpkaishi becomes "1" (in other words, at a time point when the parking start condition is satisfied). However, the CPU may start displaying the parking frame screen 300 at a time point when the driver performs the operation on the parking support button 28 regardless of the value of the parking start flag Xpkaishi. That is, when the driver performs the operation on the parking support button 28, the CPU may start displaying the parking frame screen 300 regardless of the vehicle speed Vs at a time point when the driver performs the operation on the parking support button 28. Similarly, the CPU may start displaying the leaving direction screen 1600 at a time point when the driver performs the operation on the leaving support button 29, regardless of the value of the leaving start flag Xskaishi.

Although the first embodiment is applied to the perpendicular parking in FIGs. 3 and 11, the first embodiment can be applied to the parallel parking.

The second device may display only one of arrows (icons) between the left arrow 1611 and the right arrow 1612 on the leaving direction screen 1600, the one arrow corresponding to a direction in which the vehicle VA is likely to leave the parking area. In this example, the second device may determine, based on the camera images photographed by the camera sensors 21 and the obstacle information obtained from the clearance sonars, as the direction in which the vehicle VA is likely to leave the parking area, a direction corresponding to "an area within a predetermined range from the vehicle VA, which includes neither white line parallel to the front-rear direction of the vehicle VA nor an obstacle", and which is chosen from among a left area and a right area.

The parking support device 10 does not have to comprise any clearance sonars, if each of the camera sensors 21 is a camera device (e.g. a stereo camera device) configured to be able to detect/measure an accurate distance between the vehicle VA and the obstacle.

Each of the clearance sonars may be a sensor configured to detect the obstacle by emitting wireless medium and receiving the reflected wireless medium. The parking support device 10 may comprise infrared radars, or millimeter wave radars, instead of the clearance sonars.

Each of the number of the camera sensors 21 and the number of the clearance sonars are not limited to the number represented in FIG. 1.

## Claims

1. A parking support device comprising:
a display device (70, 71) configured to display an image for a driver of a vehicle; and
a control device (20, 30, 31, 40, 43, 44, 50, 53, 60, 61) configured to execute an automatic parking control for controlling a traveling state of the vehicle in order to park the vehicle into a parking area where the vehicle can be parked,
wherein the control device is configured to:
display, on the display device, a parking area image (300) showing a relative location relationship between the vehicle and the parking area (Step 625), when the control device determines that a parking request operation for requesting the automatic parking control is performed ("Yes" at Step 605);
start a stop brake control for applying, to the vehicle, brake force equal to or greater than necessary stop brake force required to cause the vehicle not to move (Step 730), in response to the control device determining that a parking start condition has become satisfied ("Yes" at Step 720), the parking start condition being a condition which is satisfied when both a first condition and a second condition are satisfied, wherein the first condition is satisfied when the parking request operation is performed and a second condition is satisfied when the vehicle stops; and
finish the stop brake control ("No" at Step 710) and start the automatic parking control (Step 950), in response to the control device determining that a parking consent operation representing that the driver consents to park the vehicle into the parking area has been performed after the parking start condition became satisfied ("Yes" at Step 830, "Yes" at Step 1410, "Yes" at Step 1510);
wherein the control device is further configured to:
display, on the display device, with the parking area image, a consent operation reception image (320) which the driver selects when the driver consents to park the vehicle into the parking area, when the control device determines that the parking request operation has been performed;
determine that the parking consent operation is performed (Step 840) when the consent operation reception image has been selected after the parking start condition was determined to be satisfied ("Yes" at Step 830) and **characterized in that** the control device is configured to
display the consent operation reception image in an operation invalid state (Step 620) when the second condition is not satisfied, the operation invalid state being a state in which the control device does not detect operation of the consent operation image by the driver; and
display the consent operation reception image in an operation valid state (Step 630) when the second condition is satisfied, the operation valid state being a state in which the control device detects operation of the consent operation image by the driver.

2. The parking support device according to claim 1,
wherein the control device is configured to:
display, on the display device, a leaving direction image (1600) showing a leaving direction in which the vehicle leaves the parking area (Step 1820), when the control device determines that a leaving request operation to request an automatic leaving control for controlling the traveling state of the vehicle such that the vehicle leaves the parking area has been performed ("Yes" at Step 1805);
start the stop brake control when the control device determines that a leaving start condition has been satisfied (a time point t11 in FIG. 16), the leaving start condition being satisfied when both the second condition and a third condition are satisfied, the third condition being a condition which is satisfied when the leaving request operation has been performed; and
finish the stop brake control and start the automatic leaving control such that the vehicle leaves the parking area in the leaving direction (Step 1940), when the control device determines that a leaving consent operation representing that the driver consents that the vehicle leaves the parking area in the leaving direction has been performed after the leaving start condition had been satisfied (a time point t13).

## Patentansprüche

1. Einparkhilfevorrichtung, die Folgendes umfasst:
eine Anzeigevorrichtung (70, 71), die dafür konfiguriert ist, ein Bild für einen Fahrer eines Fahrzeugs anzuzeigen;
eine Steuervorrichtung (20, 30, 31, 40, 43, 44, 50, 53, 60, 61), die dafür konfiguriert ist, eine automatische Parksteuerung zum Steuern eines Fahrzustands des Fahrzeugs auszuführen, um das Fahrzeug in einem Parkbereich zu parken, in dem das Fahrzeug geparkt werden kann,
wobei die Steuervorrichtung für Folgendes konfiguriert ist:
Anzeigen, auf der Anzeigevorrichtung, eines Parkbereichsbildes (300), das eine relative Positionsbeziehung zwischen dem Fahrzeug und dem Parkbereich zeigt (Schritt 625), wenn die Steuervorrichtung bestimmt, dass eine Parkanforderungsoperation zum Anfordern der automatischen Parksteuerung durchgeführt wird ("Ja" in Schritt 605);
Starten einer Stoppbremssteuerung zum Aufbringen einer Bremskraft auf das Fahrzeug, die gleich oder größer ist als die notwendige Stoppbremskraft, die erforderlich ist, um das Fahrzeug nicht zu bewegen (Schritt 730) als Reaktion darauf, dass die Steuervorrichtung bestimmt, dass eine Parkstartbedingung erfüllt ist ("Ja" in Schritt 720), wobei die Parkstartbedingung eine Bedingung ist, die erfüllt ist, wenn sowohl eine erste Bedingung als auch eine zweite Bedingung erfüllt sind, wobei die erste Bedingung erfüllt ist, wenn die Parkanforderungsoperation durchgeführt wird, und eine zweite Bedingung erfüllt ist, wenn das Fahrzeug anhält; und
Beenden der Stoppbremssteuerung ("Nein" in Schritt 710) und Starten der automatischen Parksteuerung (Schritt 950) als Reaktion darauf, dass die Steuervorrichtung bestimmt, dass eine Einparkzustimmungsoperation, die darstellt, dass der Fahrer dem Einparken des Fahrzeugs in den Parkbereich zustimmt, durchgeführt wurde, nachdem die Parkstartbedingung erfüllt wurde ("Ja" in Schritt 830, "Ja" in Schritt 1410, "Ja" in Schritt 1510);
wobei die Steuervorrichtung ferner für Folgendes konfiguriert ist:
Anzeigen, auf der Anzeigevorrichtung, mit dem Bild des Parkbereichs, eines Zustimmungsoperation-Empfangsbildes (320), das der Fahrer auswählt, wenn der Fahrer dem Einparken des Fahrzeugs in den Parkbereich zustimmt, wenn die Steuervorrichtung bestimmt, dass die Parkanforderungsoperation durchgeführt wurde,
Bestimmen, dass die Einparkzustimmungsoperation durchgeführt wird (Schritt 840), wenn das Zustimmungsoperation-Empfangsbild ausgewählt wurde, nachdem bestimmt wurde, dass die Parkstartbedingung erfüllt ist ("Ja" bei Schritt 830) und **dadurch gekennzeichnet, dass** die Steuervorrichtung für Folgendes konfiguriert ist:
Anzeigen des Zustimmungsoperation-Empfangsbildes in einem Operation-Ungültig-Zustand (Schritt 620), wenn die zweite Bedingung nicht erfüllt ist, wobei der Operation-Ungültig-Zustand ein Zustand ist, in dem die Steuervorrichtung eine Betätigung des Zustimmungsoperationsbildes durch den Fahrer nicht erfasst; und
Anzeigen des Zustimmungsoperation-Empfangsbildes in einem Operation-Gültig-Zustand (Schritt 630), wenn die zweite Bedingung erfüllt ist, wobei der Operation-Gültig-Zustand ein Zustand ist, in dem die Steuervorrichtung eine Betätigung des Zustimmungsoperationsbildes durch den Fahrer erfasst.

2. Einparkhilfevorrichtung nach Anspruch 1,
wobei die Steuervorrichtung für Folgendes konfiguriert ist:
Anzeigen, auf der Anzeigevorrichtung, eines Ausfahrrichtungsbildes (1600), das eine Ausfahrrichtung anzeigt, in der das Fahrzeug aus dem Parkbereich ausfährt (Schritt 1820), wenn die Steuervorrichtung bestimmt, dass eine Ausfahranforderungsoperation zur Anforderung einer automatischen Ausfahrsteuerung zur Steuerung des Fahrzustands des Fahrzeugs, so dass das Fahrzeug aus dem Parkbereich ausfährt, durchgeführt worden ist ("Ja" bei Schritt 1805);
Starten der Stoppbremssteuerung, wenn die Steuervorrichtung bestimmt, dass eine Ausfahrstartbedingung erfüllt ist (ein Zeitpunkt t11 in Figur 16), wobei die Ausfahrstartbedingung erfüllt ist, wenn sowohl die zweite Bedingung als auch eine dritte Bedingung erfüllt sind, wobei die dritte Bedingung eine Bedingung ist, die erfüllt ist, wenn der Ausfahranforderungsoperation durchgeführt wurde; und
Beenden der Stoppbremssteuerung und Starten der automatischen Ausfahrsteuerung, so dass das Fahrzeug aus dem Parkbereich in der Ausfahrrichtung ausfährt (Schritt 1940), wenn die Steuervorrichtung bestimmt, dass eine Ausfahrzustimmungsoperation durchgeführt wurde, die darstellt, dass der Fahrer zustimmt, dass das Fahrzeug aus dem Parkbereich in der Ausfahrrichtung ausfährt, nachdem die Ausfahrstartbedingung erfüllt war (ein Zeitpunkt t13).

## Revendications

1. Dispositif de support de parking comprenant :
un dispositif d'affichage (70, 71) configuré pour afficher une image pour un conducteur d'un véhicule ; et
un dispositif de commande (20, 30, 31, 40, 43, 44, 50, 53, 60, 61) configuré pour exécuter une commande de parking automatique pour commander un état de déplacement du véhicule afin de garer le véhicule dans une zone de parking où le véhicule peut être garé,
dans lequel le dispositif de commande est configuré pour :
afficher, sur le dispositif d'affichage, une image de zone de parking (300) montrant une relation de localisation relative entre le véhicule et la zone de parking (étape 625), lorsque le dispositif de commande détermine qu'une opération de demande de parking pour demander la commande de parking automatique est exécutée (« Oui » à l'étape 605) ;
démarrer une commande de frein d'arrêt pour appliquer, au véhicule, une force de freinage égale ou supérieure à la force de freinage d'arrêt nécessaire requise pour faire en sorte que le véhicule ne se déplace pas (étape 730), en réponse au dispositif de commande déterminant qu'une condition de démarrage de parking est devenue satisfaite (« Oui » à l'étape 720), la condition de démarrage de parking étant une condition qui est satisfaite lorsqu'à la fois une première condition et une deuxième condition sont satisfaites, dans lequel la première condition est satisfaite lorsque l'opération de demande de parking est effectuée et une deuxième condition est satisfaite lorsque le véhicule s'arrête ; et
terminer la commande de frein d'arrêt (« Non » à l'étape 710) et démarrer la commande de parking automatique (étape 950), en réponse au fait que le dispositif de commande détermine qu'une opération de consentement de parking représentant que le conducteur consent à garer le véhicule dans la zone de parking a été effectuée après que la condition de démarrage de parking a été satisfaite (« Oui » à l'étape 830, « Oui » à l'étape 1410, « Oui » à l'étape 1510) ;
dans lequel le dispositif de commande est en outre configuré pour :
afficher, sur le dispositif d'affichage, avec l'image de la zone de parking, une image de réception d'opération de consentement (320) que le conducteur sélectionne lorsque le conducteur consent à garer le véhicule dans la zone de parking, lorsque le dispositif de commande détermine que l'opération de demande de parking a été effectuée ;
déterminer que l'opération de consentement de parking est exécutée (étape 840) lorsque l'image de réception d'opération de consentement a été sélectionnée après que la condition de démarrage de parking a été déterminée comme étant satisfaite (« Oui » à l'étape 830) et **caractérisé en ce que** le dispositif de commande est configuré pour
afficher l'image de réception d'opération de consentement dans un état d'opération invalide (étape 620) lorsque la deuxième condition n'est pas satisfaite, l'état d'opération invalide étant un état dans lequel le dispositif de commande ne détecte pas l'opération de l'image d'opération de consentement par le conducteur, et
afficher l'image de réception d'opération de consentement dans un état d'opération valide (étape 630) lorsque la deuxième condition est satisfaite, l'état d'opération valide étant un état dans lequel le dispositif de commande détecte l'opération de l'image d'opération de consentement par le conducteur.

2. Dispositif de support de parking selon la revendication 1,
dans lequel le dispositif de commande est configuré pour :
afficher, sur le dispositif d'affichage, une image de direction de sortie (1600) montrant une direction de sortie dans laquelle le véhicule quitte la zone de parking (étape 1820), lorsque le dispositif de commande détermine qu'une opération de demande de sortie pour demander une commande de sortie automatique pour commander l'état de déplacement du véhicule de telle sorte que le véhicule quitte la zone de parking a été effectuée (« Oui » à l'étape 1805) ;
démarrer la commande de frein d'arrêt lorsque le dispositif de commande détermine qu'une condition de début de sortie a été satisfaite (un instant t11 sur la figure 16), la condition de début de sortie étant satisfaite lorsque la deuxième condition et une troisième condition sont satisfaites, la troisième condition étant une condition qui est satisfaite lorsque l'opération de demande de sortie a été effectuée ; et
terminer la commande de frein d'arrêt et démarrer la commande de sortie automatique de sorte que le véhicule quitte la zone de parking dans la direction de sortie (étape 1940), lorsque le dispositif de commande détermine qu'une opération de consentement de sortie représentant que le conducteur consent à ce que le véhicule quitte la zone de parking dans la direction de sortie a été effectuée après que la condition de début de sortie a été satisfaite (un instant t13).
